# EUROPEAN PATENT APPLICATION

(11) **EP 4 372 140 A1**
(43) Date of publication of application: **22.05.2024**
(21) Application number: 21949975.3
(22) Date of filing: 12.11.2021
(51) Int. Cl.: D06F 39/10, D06F 39/08, D06F 33/32, D06F 33/42, D06F 33/34

(54) **FILTERING APPARATUS, WASHING MACHINE, AND CONTROL METHOD**

(30) Priority: 13.07.2021 CN 202110790971; 13.07.2021 CN 202110789621; 13.07.2021 CN 202110790975; 13.07.2021 CN 202110789597; 13.07.2021 CN 202110789599; 22.07.2021 CN 202110828941
(71) Applicant: Qingdao Haier Washing Machine Co., Ltd., Qingdao, Shandong 266101 (CN); HAIER SMART HOME CO., LTD., Laoshan District Qingdao Shandong 266101 (CN)
(72) Inventor: XU, Sheng, Qingdao, Shandong 266101 (CN); LV, Yanfen, Qingdao, Shandong 266101 (CN); LIU, Kai, Qingdao, Shandong 266101 (CN)
(74) Representative: Beck & Rössig European Patent Attorneys
(86) International application number: PCT/CN2021/130329
(87) International publication number: WO 2023/284203

(57) **Abstract**

The present invention relates to the technical filed of washing machine, and discloses a filter device, a washing machine, and a control method. The filter device, comprising: a filter chamber having a water inlet and a filtered water outlet, and a sealing support part formed by the outer circumference of the filtered water outlet being extended toward the outside the filter chamber; a filter mechanism, being rotatably arranged in the filter chamber, wherein an end of the filter mechanism is a water outlet joint inserted in the sealing support part, and the water outlet joint is rotatably and hermetically connected with the sealing support part; a first bearing, being sleeved on the water outlet joint; and a first sealing member, being disposed on the side of the first bearing facing the inside of the filter chamber, for sealing the gap between the water outlet joint and the sealing support part. In the present invention, the first bearing supports the water outlet j oint, so that the filter mechanism is more stably mounted in the filter chamber and rotate more smoothly. In addition, the first sealing member can prevent water in the first bearing from making contact with water in the filter chamber, thereby ensuring the action effect of the first bearing.

## Description

### Field

The invention belongs to the technical field of washing machines, and in particular relates to a filtering device, a washing machine and a control method.

### Background

During the washing process of the laundry by the washing machine, due to the friction between the laundry and between the laundry and the washing machine itself, the laundry will produce lint and fall off and mix into the washing water. If the lint in the washing water cannot be removed, it is likely to adhere to the surface of the laundry after washing, affecting the washing effect of the laundry. For this reason, a filter for filtering lint is installed on the existing washing machine, and washing water is circulated through the filter during the washing process to remove lint from the washing water.

The filter of the existing washing machine is generally arranged inside the inner tub or the drain pump, and is used to filter lint and sundries in the washing water. However, after the washing machine has been used for a long time, the filter will be filled with lint and debris, which will affect the filtering effect of the filter, cause the blockage of the drain valve/drain pump, and easily breed bacteria, so it needs to be cleaned in time, otherwise It will pollute the washing water, cause secondary pollution to laundry, and affect the health of users. However, most washing machines require the user to remove the filter and clean it manually, which is inconvenient to operate.

Due to the above problems, self-cleaning filters have been proposed in the prior art. However, most filters with self-cleaning function do not completely remove filtered impurities such as lint, and the accumulation of filtered impurities cannot be avoided after long-term use. On the other hand, since the sewage outlet is directly connected to the sewage pipeline leading to the outside of the washing machine, the filtered impurities in the sewage are discharged out of the washing machine together with the washing machine. There may be fine lint in the filtered impurities, and the fine lint enters the ecological environment along with the drainage flow. Circulation, there are problems that pose a threat to human health.

In view of this, the present invention is proposed.

### Summary

The problem to be solved by the present invention is to overcome the deficiencies of the prior art, and a filter device, a washing machine and a control method are provided. By improving the structure of the filter device, the effect of automatically removing the filtered impurities on the filter device is improved, and the filtered impurities are avoided being accumulated in the filter device. The filtered impurities drained out of the filter device is collected by a recovery device, so it is avoided that the filtered impurities are directly drained out of the washing machine with the water flow, and that the fine lint in the filtered impurities enters the ecological circulation.

In order to solve the problems described above, the present invention adopts the basic idea of technical solution as follows.

The first object of the present invention is to provide a filter device, comprising:
a filter chamber, having a water inlet and a filtered water outlet, and a sealing support part formed by the outer circumference of the filtered water outlet being extended toward the outside the filter chamber;
a filter mechanism, being rotatably arranged in the filter chamber, wherein an end of the filter mechanism is a water outlet joint inserted in the sealing support part, and the water outlet joint is rotatably and hermetically connected with the sealing support part;
a first bearing, being sleeved on the water outlet joint; and
a first sealing member, being disposed on the side of the first bearing facing the inside of the filter chamber, for sealing the gap between the water outlet joint and the sealing support part.

Further, the first sealing member is sleeved on the water outlet joint, the inner wall of the first sealing member is in sealing connection with the outer wall of the water outlet joint, and the outer wall of the first sealing member is rotatable and hermetically connected with the sealing support part.

Further, the filter device further includes a second sealing member. The second sealing member is arranged on the side of the first bearing opposite to the interior of the filter chamber, for covering the gap between the water outlet joint and the sealing support part.

Preferably, the second sealing member is sleeved on the water outlet joint, the inner wall of the second sealing member is in sealing connection with the outer wall of the water outlet joint, and the outer wall of the second sealing member is rotatable and hermetically with the inner wall of the sealing support part.

Further, the inner wall of the sealing support part has a stepped structure. Annular structures are sequentially formed from the end of the sealing support part to the outside of the filter chamber, and the inner diameters of the annular structures are gradually decreased from a first limiting surface, a second limiting surface and a third limiting surface.

The surface of the first sealing member facing the outside of the filter chamber abuts against the first limiting surface. The surface of the first bearing facing outside the filtering chamber abuts against the second limiting surface. The surface of the second sealing member facing the outside of the filter chamber abuts against the third limiting surface.

Preferably, the outer diameter of the end of the water outlet joint near the outside of the filter chamber is smaller than the outer diameter of the other end. Annular structures are formed on the outer wall of the water outlet joint, and the fourth limiting surface of the water outlet joint is perpendicular to the axis of the water outlet joint. A surface of the first bearing facing the inside of the filter chamber abuts against the fourth limiting surface.

Further, the end of the sealing support part away from the filter chamber is connected to a filter chamber flange. The middle of the filter chamber flange has a through-opening for being communicated with the water outlet joint. The outer periphery of the through-opening is extended toward a direction away from the sealing support portion to form a connection portion.

Preferably, the surface of the filter chamber flange facing the side of the sealing support part has an insertion part, and the insertion part is inserted into an opening at an end of the sealing support part.

Further, another end of the filter mechanism has a rotation support part extending toward the outside of the filter chamber along the rotation axis, and the filter chamber is provided with an installation port for allowing the rotation support part to pass through. The rotation support part is rotatably and hermetically connected with the installation port.

Preferably, the outer circumference of the installation port is extended outward from the filter chamber along the axis of the rotation support part to form a sleeve part. A third sealing member is sleeved on the rotation support part. The inner wall of the third sealing member is hermetically connected with the outer wall of the rotation support part, and the outer wall of the third sealing member is rotatably and hermetically connected with the inner wall of the sleeve part.

More preferably, an inner diameter of an end of the sleeve part away from the filter chamber is smaller than an inner diameter of the other end, the annular structure is formed on the inner wall of the sleeve part, and a fifth limiting surface of the sleeve part is perpendicular to the axis of the rotating support part. A surface of the third sealing member facing the outside of the filter chamber abuts against the fifth limiting surface.

Further, a second bearing is provided between the sleeve part and the rotation support part, and the second bearing is sleeved on the rotation support part, and is located on the side of the third sealing member facing the outside of the filter chamber.

Preferably, an outer diameter of one end of the rotation support part close to the filter chamber is larger than an outer diameter of the other end, the annular structure is formed on the outer wall of the rotation support part, and a sixth limiting surface of the rotation support part is perpendicular to the axis of the rotation support part. The surface of the second bearing facing the inside of the filter chamber abuts against the sixth limiting surface.

Further, the filter chamber also has a sewage outlet, and an orientation of the water inlet and the sewage outlet is perpendicular to an axial direction of the filter mechanism.

Preferably, the filter chamber has a cylindrical structure, the water inlet is arranged near a first end of the filter chamber, the sewage outlet is arranged near a second end of the filter chamber, and the water inlet and the sewage outlet are symmetrically located around the peripheral direction of filter chamber.

Further, the outer wall of the sealing support part is provided with a reinforcing rib extending in radial direction of the sealing support part, and the reinforcing rib is connected with the surface of the filter chamber where the filtered water outlet is located.

The second object of the present invention is to provide a filter device, comprising:
a filter chamber, having a water inlet, a filtered water outlet and a sewage outlet for discharging filtered impurities;
a filter mechanism, rotatably arranged in the filter chamber to filter water entering the filter chamber;
cleaning particles, being capable of being in the filter chamber, and used for cleaning an inner wall of the filter chamber and an outer wall of the filter mechanism with the friction and collision of the water flow; and
an intercepting mechanism, arranged outside the filter chamber, and communicated with the sewage outlet, and used for intercepting the cleaning particles drained out from the sewage outlet.

Further, the intercepting mechanism includes a particle collection chamber. The particle collection chamber has an inlet port communicated with the sewage outlet, and an outlet port for discharging sewage carrying filtered impurities.

A blocking member is provided in the particle collection chamber for blocking cleaning particles from being discharged from the outlet port.

Further, the blocking member is a baffle. A distance between the baffle and the inner wall of the particle collection chamber is D, a width of the cleaning particles is d, and D<d.

Preferably, the baffle is arranged perpendicular to the direction of the water flow in the particle collection chamber.

Further, both a diameter of the sewage outlet and a diameter of the inlet port of the particle collection chamber are greater than the width d of the cleaning particles.

Further, the intercepting mechanism is arranged lower than the sewage outlet of the filter device, and a density of the cleaning particles is lower than that of water.

Preferably, the density of the cleaning particles is in a range of 0.3 to 0.9 times as the density of water, preferably in a range of 0.4 to 0.6 times.

Further, a sealing support part is formed by extending a periphery of the filtered water outlet toward the outside of the filter chamber.

The filter mechanism has a water outlet joint rotatably inserted in the sealing support part, and a bearing is sleeved on the water outlet joint. A sealing member is provided on the side of the bearing facing the inside of the filter chamber, and the gap between the water outlet joint and the sealing support part is sealed by the sealing member.

Further, both the direction of the water inlet and the direction of the sewage outlet are perpendicular to the axial direction of the filter mechanism.

Preferably, the filter chamber has a cylindrical structure, the water inlet is arranged near a first end of the filter chamber, and the sewage outlet is arranged near a second end of the filter chamber.

The third object of the present invention is to provide a washing machine, comprising:
a water holding barrel,
a filter device, communicated with the water holding barrel and being for filtering water from the water holding barrel, and having a sewage outlet for draining out the filtered impurities; and
a recovery device, communicated with the sewage outlet of the filter device to collect the filtered impurities discharged from the filter device.

Further, the filter device is the above-mentioned filter device.

Further, the recovery device includes:
a housing, having a recovery chamber inside;
a filter assembly, arranged in the recovery chamber and dividing the recovery chamber into a first chamber and a second chamber.

The sewage outlet of the filter device is communicated with the first chamber. The sewage carrying the filtered impurities is delivered to the first chamber, and enters in the second chamber after being filtered by the filter assembly. The filtered impurities are collected in the first chamber.

Preferably, a water outlet is provided on the second chamber for discharging the clean water.

Further, the washing machine further includes a detergent box. The detergent box is communicated with the water holding barrel through a pipeline. The second chamber is communicated with the detergent box, and the clean water being filtered flows into the detergent box from the second chamber, and then enters the water holding barrel.

Further, the recovery device and the detergent box are arranged up and down, and a pathway for allowing the clean water filtered to pass through is arranged between them.

Preferably, the pathway through which the clean water filtered passes is extended vertically.

Further, the recovery device is arranged on one side of the detergent box in the horizontal direction, and the pathway through which the clean water filtered passes is arranged between them.

Preferably, the pathway through which the clean water filtered passes is extended horizontally.

Preferably, the housing of the recycling device and the detergent box are integrally arranged.

Further, the second chamber is communicated with the water holding barrel through a pipeline, and the clean water filtered is delivered into the water holding barrel.

Preferably, the washing machine further includes a detergent box, and the recovery device and the detergent box are both arranged on a top area of the washing machine. The recovery device is arranged on one side close to the top area, and the detergent box is arranged on the other side near the top area.

Further, a first water return hole is provided on the water holding barrel, and the second chamber is communicated with the first water return hole through a pipeline.

Alternatively, a window pad provided on an opening of the water holding barrel, and a second water return hole is provided on the window pad. The second chamber is communicated with the second water return hole through a pipeline.

Further, the washing machine further includes a main drainage pipeline through which water is drained to the outside, and the second chamber is communicated with the main drainage pipeline through a pipeline.

Further, the washing machine further includes a shell, and the water holding barrel and the filter device are arranged in the shell; the recovery device is capable of being inserted in and extracted out of the shell.

Further, the washing machine also includes a detergent box, and the detergent box is communicated with the water barrel through a pipeline. The recovery device is arranged in the detergent box, and includes a filter assembly for filtering sewage carrying filtered impurities.

The sewage in the recovery device is filtered through the filter assembly, and the clean water filtered enters the water holding barrel through the detergent box.

Further, a return water pipeline is provided. A water inlet of the return water pipeline is communicated with the filter device, and a water outlet of the return water pipeline is communicated with the water holding barrel. The filtered water in the filter device is delivered into the water holding barrel.

Preferably, a return water control valve is provided in the return water pipeline for controlling to cut on or off the return water pipeline.

Further, a window pad is provided at the opening of the water holding barrel. The filtered water delivered in the return water pipeline enters the water holding barrel through the window pad.

Further, the window pad is provided with a window pad return port being communicated with the water holding barrel, and the water outlet of the return water pipeline is connected with the window pad return port.

Preferably, the window pad return port is disposed on the top area of the window pad.

Further, a spray head assembly is provided on the window pad. The water outlet of the return water pipeline is connected to the spray head assembly. Or, the water outlet of the return water pipeline is connected with a spray pipeline through which water is supplied to the spray head assembly.

Further, the water holding barrel is provided with a return port of the water holding barrel, and the water outlet of the return water pipeline is connected with the return port of the water holding barrel.

Preferably, the return port of the water holding barrel is arranged on a barrel wall of the water holding barrel.

Further, a buffer member is provided at the water outlet of the return water pipeline, and the return water pipeline is connected with the return port of the water holding barrel through the buffer member.

Preferably, the buffer member is a bellows with a certain length.

Further, the washing machine further includes a main water inlet pipeline connected with an external water source. The water outlet of the return water pipeline is connected with the main water inlet pipeline.

Further, a detergent box is provided in the main water inlet pipeline, the water inlet of the detergent box is communicated with the external water source, and the water outlet the detergent box is communicated with the water holding barrel.

The detergent box is provided with a filtered water inlet, and the water outlet of the return water pipeline is connected with the filtered water inlet. The filtered water delivered in the return water pipeline enters the water holding barrel through the detergent box.

Further, the sewage outlet of the filtering device is connected with the recovery device through a sewage pipeline, and a sewage control valve for controlling to cut on and cut off the sewage pipeline is arranged on the sewage pipeline.

Preferably, when the sewage control valve is opened, the sewage pipeline is unidirectionally communicated from the filter device to the recovery device.

Further, the washing machine also includes:
an external drainage pipeline , used for draining water to the outside of the washing machine; and
a switching device, controlling one of the filter device and the drainage pipeline to be connected to the water holding barrel.

Further, the switching device is a switching valve assembly, including:
a water inlet, being communicated with the water holding barrel through a pipeline;
a first water outlet, being communicated with the filter device;
a second water outlet, being communicated with the external drainage pipeline; and
a switching mechanism, controlling one of the first water outlet and the second water outlet to be communicated with the water inlet.

Further, a circulation pump is arranged between the water inlet of the switching valve assembly and the water holding barrel.

Preferably, the water holding barrel is provided with a drainage pipe of the water holding barrel, and the drainage pipe of the water holding barrel is connected with the water inlet of the circulation pump. The water outlet of the circulation pump is connected with the drainage pipeline. The drainage pipeline is connected with the water inlet of the switching valve assembly.

Further, the switching device is a circulation drainage pump, including:
a pump assembly, provided with a pump inlet communicated with the water holding barrel, a circulation water port communicated with the filtering device, and a drain port communicated with the external drainage pipeline;
a circulation motor, installed on the pump assembly at a position corresponding to the circulation water port to control to open and close the circulation water port; and
a drain motor, installed on the pump assembly at a position corresponding to the drain port to control to open and close the drain port.

Further, the water holding barrel is provided with a drainage pipe of the water holding barrel, and the drainage pipe of water holding barrel is connected to the pump inlet. The circulation water port is communicated with the filter device through the circulation pipeline. The drain port is communicated with the external drainage pipeline through the drainage pipeline.

Further, the pump assembly includes:
a pump body, being a hollow columnar structure with a certain length, of which one end is closed, and the side wall close to the other end is provided with the pump inlet;
a circulation motor installation part, arranged on the side wall close to the closed end of the pump body, and having a circulation motor installation port communicated with the inside of the pump body, wherein, the direction of the circulation motor installation port is perpendicular to the length direction of the pump body, and the circulation water port is arranged on the side wall of the circulation motor installation part; and
a drainage motor installation part, arranged on the end of the pump body where the pump inlet is located, and having a drainage motor installation port communicated with the inside of the pump body, wherein the direction of the drainage motor installation port is parallel with the length direction of the pump body, and the drain port is provided on the side wall of the drain motor installation part.

Preferably, the directions of the pump inlet and the circulation water port are parallel to each other, and the direction of the drain port is perpendicular to the direction of the pump inlet.

Further, a circulation filter pipeline is provided. The water inlet and the water outlet of the circulation filter pipeline are respectively connected with the bottom area of the water holding barrel, and the filter device is arranged on the circulation filter pipeline.

Further, a water outlet of the water holding barrel is provided at the bottom area of the wall of the water holding barrel, and is connected with the water inlet of the circulation filter pipeline. The bottom area of the wall of the water holding barrel is also provided with a return port of the water holding barrel, and the return port is connected with the water outlet of the circulation filter pipeline.

Preferably, the water outlet of the water holding barrel is arranged close to the opening of the water holding barrel, and the return port of the water holding barrel is arranged close to the rear of the water holding barrel.

Alternatively, the water outlet of the water holding barrel is arranged close to the rear of the water holding barrel, and the return port of the water holding barrel is arranged close to the opening of the water holding barrel.

Further, a switching device is provided between the water inlet of the circulation filter pipeline and the filter device.

The switching device is connected with the drainage pipeline through which water is drained to the outside of the washing machine, and controls one of the filter device and the water inlet of the drainage pipeline to be connected with the water inlet of the circulation filter pipeline.

Further, a circulation pump is provided between the switching device and the water inlet of the circulation filter pipeline. The switching device includes:
a water inlet, communicated with the water outlet of the circulation pump;
a first water outlet, communicated with the filter device;
a second water outlet, communicated with the water inlet of the drainage pipeline; and
a switching mechanism, controlling one of the first water outlet and the second water outlet to be communicated with the water inlet.

Further, the switching device is a circulation drainage pump, including:
a pump assembly, provided with a pump inlet being communicated with the water inlet of the circulation filter pipeline, a circulation water port being communicated with the filter device, and a drain port being communicated with the water inlet of the drainage pipeline;
a circulation motor, installed on the pump assembly at a position corresponding to the circulation water port to control to open and close the circulation water port; and
a drain motor, installed on the pump assembly at a position corresponding to the drain port to control to open and close the drain port.

Further, the switching device includes:
a circulation pump, having a circulation pump housing respectively connected with the filter device and the water inlet of the circulation filter pipeline, and a circulation motor for controlling the filter device to be connected with or disconnected from the water inlet of the circulation filter pipeline; and
a drainage pump, having a drainage pump housing respectively connected with the water inlet of the circulation filter pipeline and the water inlet of the drainage pipeline, and a drainage motor for controlling the water inlet of the circulation filter pipeline to be connected or disconnected from the water inlet of the drainage pipeline.

Further, the filtering device is arranged under the water holding barrel.

Preferably, the recovery device is arranged at the bottom area of the washing machine.

The fourth object of the present invention is to provide a control method for a washing machine. The washing machine also includes a circulation pump, and the circulation pump is arranged on the pipeline connecting the water holding barrel with the water inlet of the filter device, or on the return water pipeline.

The control method includes: turning on the circulation pump, delivering water in the water holding barrel to the filter device for filtering, and delivering the filtered water back to the water holding barrel through the return water pipeline.

The fifth object of the present invention is to provide a control method for a washing machine. The switching device connects the water holding barrel with the filter device, and the water in the water holding barrel is delivered into the filter device.

The switching device connects the water holding barrel with the discharge pipeline, and the water in the water holding barrel is drained out of the washing machine through the discharge pipeline.

Further, the filter device has a filtered water outlet, and the filtered water outlet is communicated with the water holding barrel through the return water pipeline. A return water control valve is set on the return water pipeline.

The sewage outlet of the filter device is connected with the recovery device through a sewage pipeline, and a sewage control valve is arranged on the sewage pipeline.

The water holding barrel is communicated with the filter device by the switching device. When the return water pipeline is open by the return water control valve and the sewage control valve is close, the water in the water holding barrel is passed into the filter device for filtration, and the filtered water flows back to the water holding barrel through the return water pipeline.

The water holding barrel is communicated with the filter device by the switching device. When the return water control valve is closed and the sewage pipe is open by the sewage control valve, the water in the water holding barrel is passed into the filter device for cleaning the filter device, and then passed into the recovery device by the sewage pipeline.

The sixth object of the present invention is to provide a control method for a washing machine. The water in the water holding barrel is delivered into the filter device through the circulation filter pipeline, and the water is filtered by the filter device, and then the filtered water is delivered into the water holding barrel along the circulation filter pipeline.

Further, the switching device is provided between the water inlet of the circulation filter pipeline and the filter device, and the switching device is connected with the drainage pipeline through which water is drained to the outside of the washing machine.

The water holding barrel is communicated with the filter device by the switching device, and water in the water holding barrel is delivered into the filter device through the circulation filter pipeline.

The water holding barrel is communicated with the water inlet of the drainage pipeline by the switching device, and the water in the water holding barrel is delivered into the drainage pipeline and is discharged from the washing machine.

After adopting the above technical solution, the present invention has the following beneficial effects compared with the prior art.

In the filter device of the present invention, the filter mechanism is controlled to rotate for self-cleaning the filter device. The first bearing is set on the water outlet joint of the filter mechanism for support, and the setting of the first sealing member and the second sealing member ensures the installation environment of the first bearing to be in water free. It is avoided the failure caused by the contact of the first bearing with water, and ensuring the action of the first bearing.

In the filter device of the present invention, the cleaning particles can rub the inner wall of the filter chamber and the outer wall of the filter mechanism during the filter process to prevent the deposition of filtered impurities and prevent the filter device from being blocked, resulting in affecting the filter efficiency. After the filtration is completed, the filtered impurities accumulated during the filtration process can be drained out through the sewage outlet with the water flow. The cleaning particles in the filter chamber can be discharged out of the filter chamber along with the water flow, and the cleaning particles can be intercepted by the interception mechanism arranged downstream of the sewage outlet, so that the cleaning particles can be reused. At the same time, the cleaning particles in the filter chamber are avoided to be accumulated at the sewage outlet, and sewage in the filter chamber is smoothly discharged.

In the washing machine of the present invention, the sewage outlet of the filter device is connected with the recovery device, and the filtered impurities discharged from the filter device are collected by the recovery device, so as to prevent the filtered impurities from being directly drained out of the washing machine with the drainage water flow. The fine lint cannot be mixed into the ecological cycle. The filter assembly is set in the recovery device to filter the sewage discharged by the filter device, thereby separating the filtered impurities from the water. It is convenient for the user to process the filtered impurities.

The specific implementation manners of the present invention are further described in detail below in conjunction with the accompanying drawings.

### Description of drawings

The accompanying drawings, as a part of the present invention, are used to further understand the present invention. The embodiments of the present invention and their descriptions are used to explain the present invention, but do not improperly limit to the present invention. Apparently, the drawings in the following description are only some embodiments, and those skilled in the art can also obtain other drawings according to these drawings without creative efforts. In the figures:
Fig. 1 is a schematic structural view of a filtering device in Embodiment 1 of the present invention;
Fig. 2 is the schematic diagram of A-A section in Fig. 1 of the present invention;
3 is a schematic structural view of the washing machine in Embodiment 2 of the present invention;
Fig. 4 is the enlarged schematic diagram at place B in Fig. 3 of the present invention;
Fig. 5 is the enlarged schematic diagram at place C in Fig. 3 of the present invention;
Fig. 6 is a schematic view of the front side of the washing machine in Embodiment 2 of the present invention;
Fig. 7 is a schematic structural view of the washing machine in Embodiment 3 of the present invention;
Fig. 8 is a schematic structural view of washing machines in Embodiments 4 and 5 of the present invention;
Fig. 9 is a schematic view of the front side of the washing machine in Embodiment 4 of the present invention;
Fig. 10 is a schematic diagram of the front side of the washing machine in Embodiment 5 of the present invention;
Fig. 11 is a schematic structural view of a window pad in Embodiment 8 of the present invention;
Fig. 12 is a schematic structural view of the washing machine in Embodiment 9 of the present invention;
Fig. 13 is a schematic structural view of the washing machine in Embodiment 10 of the present invention;
Fig. 14 is a schematic diagram of the washing machine in the drainage state in Embodiment 11 of the present invention;
Fig. 15 is a schematic diagram of the washing machine when the circulation motor being working state according to Embodiment 12 of the present invention;
Fig. 16 is a schematic diagram of the washing machine when the drainage motor being working state according to the embodiment 12 of the present invention;
Figure 17 is a schematic structural view of the pump body in Embodiments 12 and 14 of the present invention;
Fig. 18 is a schematic structural view of the washing machine of Embodiment 13 of the present invention;
Fig. 19 is an enlarged schematic view at place D in Fig. 18 of the present invention;
Fig. 20 is a schematic diagram of the washing machine in the draining state according to Embodiment 13 of the present invention;
Fig. 21 is a schematic structural view of the washing machine in Embodiment 14 of the present invention;
Fig. 22 is a schematic diagram of the washing machine in the draining state according to Embodiment 14 of the present invention;
Fig. 23 is a schematic structural view of the washing machine in Embodiment 16 of the present invention;
Fig. 24 is an enlarged schematic diagram at place E in Fig. 23 of the present invention;

In the figure: 10, shell; 100, water holding barrel; 101, return port of the water holding barrel; 110, window pad; 111, window pad return port; 112, spray head assembly; 113, downlight; 114, drying air duct inlet; 210, drainage pipeline; 220, circulation pipeline; 230, return water pipeline; 231, return water control valve; 240, sewage pipeline; 241, sewage control valve; 250, external drainage pipeline; 260, drainage pipe of water holding barrel; 270, switching device; 271, switching valve assembly; 300, detergent box; 301, filtered water inlet; 310, second water inlet pipe; 400, circulation pump; 500, recovery device; 501, filtered impurities; 510, housing ;520, filter assembly; 531, first chamber; 532, second chamber; 600, filter device; 601, first limiting surface; 602, second limiting surface; 603, third limiting surface; 604, fourth limiting surface; 605, fifth limiting surface; 606, sixth limiting surface; 610, filter chamber; 6101, water inlet; 6102, filtered water outlet; 6103, sewage outlet; 6104, installation port; 611, sealing support part; 612, sleeve part; 613, reinforcing rib; 620, filter mechanism; 621, water outlet joint; 622, rotating support part; 623, filter screen support part; 624, motor installation part; 625, filter screen; 631, first bearing; 632, second bearing; 641, first sealing member; 642, second sealing member; 643, third sealing member; 650, filter chamber flange; 651, connection portion; 652, insertion part; 653, through-opening; 660, driving mechanism; 670, intercepting mechanism; 671, blocking piece; 680, cleaning particles; 700, circulation drainage pump; 701, circulation motor; 702, drainage motor; 710, pump assembly; 711, circulation motor installation part; 712, drainage motor installation part; 713, pump body; 721, circulation water port; 722, drain port; 723, pump inlet.

It should be noted that these drawings and descriptions are not intended to limit the scope of the present invention in any way, but illustrate the concept of the present invention for those skilled in the art by referring to specific embodiments.

### Detailed Description

In order to make the purpose, technical solutions and advantages of the embodiments of the present invention more clear, the technical solutions in the embodiments of the present invention are clearly and completely described below in company with the drawings. The following embodiments are used to illustrate the present invention, but not to limit the scope of the present invention.

### Embodiment 1

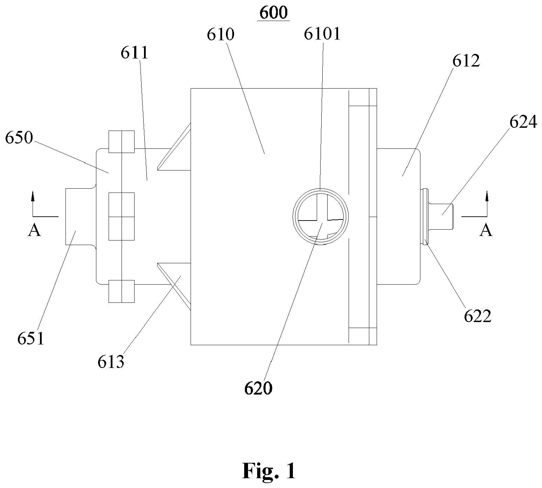

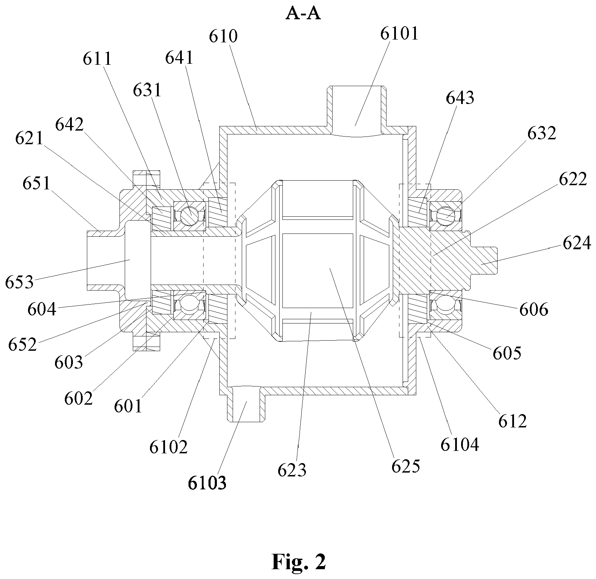

As shown in Figure 1 and Figure 2, the filter device 600 described in this embodiment includes:
the filter chamber 610 having a water inlet 6101 and a filtered water outlet 6102, and a sealing support part 611 formed by the outer circumference of the filtered water outlet 6102 being extended toward the outside the filter chamber 610;
a filter mechanism 620,beingrotatably arranged in the filter chamber 610, wherein an end of the filter mechanism is a water outlet joint 621 inserted in the sealing support part 611 and the water outlet joint 621 is rotatably and sealingly connected with the sealing support part 611;
a first bearing 631,being sleeved on the water outlet joint 621; and
a first sealing member 641,being disposed on the side of the first bearing 631 facing the inside of the filter chamber 610, for sealing the gap between the water outlet joint 621 and the sealing support part 611.

Specifically, the filter mechanism 620 includes a filter screen support and a filter screen 625.

The filter screen support specifically includes: a filter screen support part 623 located inside the filter chamber 610, and the filter screen 625 covering the surface of the filter screen support part 623;
the water outlet joint 621, being arranged at the left side of the filter screen support part 623 and rotatably inserted in the sealing support part 611; and
a rotating supporting part 622,being arranged at the right side of the filter screen support part 623 and rotatably connected with the filtering chamber 610.

The filtering device 600 of this embodiment can be installed in washing apparatus, and is used for removing lint carried in washing water. The washing apparatus includes, but is not limited to, washing machines, nursing machines, and dishwashers.

The washing water to be filtered inside the washing apparatus is delivered to the filter device 600, and flows the inside of the filter chamber 610 from the water inlet 6101. When passing through the filter mechanism 620, the lint in the washing water is blocked by the filter screen 625 and adheres to the surface of the filter screen 625. The washing water which flows into the inside of the filter screen 625 does not contains lint. The filtered washing water passes through the water outlet joint 621 and finally flows out of the filter chamber 610 from the sealing support part 611 at the filtered water outlet 6102.

When the filter device 600 needs to be cleaned, the filter mechanism 620 is driven to rotate in the filter chamber 610 to stir the residual water in the filter chamber 610, so that the lintis peeled off from the filter screen 625 under the action of centrifugal force and turbulent water flow, and falls into the water in the filter chamber 610. The filter chamber 610 is also provided with a sewage outlet 6103, and the water and lint remaining in the filter chamber 610 can be discharged through the sewage outlet 6103.

The filter device 600 of this embodiment can realize the self-cleaning function through the filter mechanism 620 being capable of rotating. The user does not need to detach the filter device 600 for manual cleaning, so it is convenient to use.

The first bearing 631 is arranged between the water outlet joint 621 and the sealing support part 611 to support the water outlet joint 621, so that the water outlet joint 621 can smoothly rotate in the sealing support part 611 .It is ensured that the filter mechanism 620 is stably rotated in the filter chamber610 due to the stable structure. The first sealing member 641 is arranged on the right side of the first bearing 631,so the washing water in the filter chamber 610 cannot enter the gap between the water outlet joint 621 and the sealing support part 611.The first bearing 631 is prevented from contacting with water, to avoid the failure of the first bearing 631 and ensure the function of the first bearing 631. At the same time, the first sealing member 641 also prevents unfiltered washing water from flowing out from the filtered water outlet 6102 through the sealing support part 611, which affects the efficiency of removing lint through the filter device 600.

In the specific solution of this embodiment, the first sealing member 641 is sleeved on the water outlet joint 621, the inner wall of the first sealing member 641 is in sealing connection with the outer wall of the water outlet joint 621, and the outer wall of the first sealing member 641 is rotatable and hermetically connected with the sealing support part 611.

In a further solution of this embodiment, the filter device 600 further includes a second sealing member 642. The second sealing member 642is arranged on the side of the first bearing 631 opposite to the interior of the filter chamber 610, for covering the gap between the water outlet joint 621 and the sealing support part 611.

Specifically, the second sealing member 642 is sleeved on the water outlet joint 621, the inner wall of the second sealing member 642 is in sealing connection with the outer wall of the water outlet joint 621, and the outer wall of the second sealing member 642 is rotatable and hermetically with the inner wall of the sealing support part 611.

In the above solution, the second sealing member 642 is provided on the left side of the first bearing 631.The water flowing out through the water outlet joint 621 can be blocked by the second sealing member 642 and does not contact with the first bearing 631. The first bearing 631 is located between the first sealing member 641 and the second sealing member 642, so that it is ensured that the installation environment of the first bearing 631 is water-free to the greatest extent, and avoided the rust of the first bearing 631 when contacting with water. Therefore the filter mechanism 620 can smoothly rotate.

In a further solution of this embodiment, the inner wall of the sealing support part 611 has a stepped structure. Annular structures are sequentially formed from the end of the sealing support part 611 to the outer side of the filter chamber 610, and the inner diameters of the annular structures are gradually decreased from the first limiting surface 601, the second limiting surface 602 and the third limiting surface 603.

The surface of the first sealing member 641 facing the outside of the filter chamber 610 abuts against the first limiting surface 601.The surface of the first bearing 631 facing outside the filtering chamber 610 abuts against the second limiting surface 602.The surface of the second sealing member 642 facing the outside of the filter chamber 610 abuts against the third limiting surface 603.

In the above solution, a plurality of vertical annular limiting surfaces are formed on the inner wall of the sealing support part 611 with a stepped structure, which respectively abut against the left surfaces of the first sealing member 641, the first bearing 631 and the second sealing member 642 to restrict the movement of the above three parts in the axial direction of the water outlet j oint 621. Sothe match between the water outlet j oint 621 and the sealing support part 611 is prevented from loosening during the rotation of the filter mechanism 620.

In the preferred solution of this embodiment, the outer diameter of the end of the water outlet joint 621 near the outside of the filter chamber 610 is smaller than the outer diameter of the other end. Annular structures are formed on the outer wall of the water outlet joint 621, and the fourth limiting surface 604of the water outlet joint 621is perpendicular to the axis of the water outlet joint 621. A surface of the first bearing 631 facing the inside of the filter chamber 610 abuts against the fourth limiting surface 604.

The outer diameter of the left end of the water outlet joint 621is smaller than that of the right end, and the fourth limit surface 604 towards the left is formed at the abrupt change in the outer diameter and abuts against the right side surface of the first bearing 631. In this way, both sides of the first bearing 631 are limited by the limiting structures, and the structure is more stable.

In this embodiment, the end of the sealing support part 611 away from the filter chamber 610, that is, the left end of the sealing support part 611, is connected to the filter chamber flange 650.The middle of the filter chamber flange 650 has a through-opening 653 for being communicated with the water outlet joint 621. The outer periphery of the through-opening 653 is extended away from the sealing support portion 611 to form a connection portion 651.

Preferably, the surface of the filter chamber flange 650 facing the side of the sealing support part 611 has a protruding portion 652, and the insertion portion 652 is inserted into the opening at the left end of the sealing support part 611.

In the above scheme, the left end of the sealing support part 611 is connected to the filter chamber flange 650, and the connection part 651 is formed on the filter chamber flange 650. The outer diameter of the connection part 651 is smaller than the outer diameter of the sealing supporting part 611, and the inner diameter of the connection part 651 is preferably equal to the inner diameter of the water outlet joint 621. When the filter device 600 is installed in the washing machine, the connection part 651 is connected with the pipeline to allow the washing water without lint to flow out after being filtered. Compared with the way that the pipeline is directly connected to the left end of the sealing support part 611, the installation is easier.

The right side of the filter chamber flange 650 has the insertion portion 652 inserted into the opening of the left end of the sealing support part 611, which facilitates the positioning of the filter chamber flange 650 and the sealing support portion 611 during assembly. A number of fixing parts are respectively arranged on the periphery of the filter chamber flange 650 and the sealing support part 611, and the filter chamber flange 650 is fixed with the sealing support part 611 by screws passing through the fixing parts.

In a further solution of this embodiment, the rotation support part 622 at the right end of the filter mechanism 620 is extended toward the outside of the filter chamber 610 along the rotation axis, and the filter chamber 610 is provided with an installation port 6104 for allowing the rotation support part 622 to pass through. The rotation support part 622 is rotatably and hermetically connected with the installation port 6104.

In this embodiment, the filter mechanism 620 is driven to rotate to clean the filter device 600 by connecting the drive mechanism with the filter mechanism 620. The rotating support part 622 is protruded from the right end of the filter chamber 610, and a motor installation part 624 is provided at the right end of the rotation support part 622 for connecting with the drive mechanism, such as a motor.

Further, the outer circumference of the installation port 6104 is extended outward from the filter chamber 610 along the axis of the rotation support part 622 to form a sleeve portion 612.The third sealing member 643 is sleeved on the rotation support part 622. The inner wall of the third sealing member 643 is hermetically connected with the outer wall of the rotation support part 622, and the outer wall of the third sealing member 643 is rotatably and hermetically connected with the inner wall of the sleeve portion 612.

A second bearing 632 is provided between the sleeve part 612 and the rotating support part 622, and the second bearing 632 is sleeved on the rotating support part 622 and located on the side of the third sealing member 643 facing the outside of the filter chamber 610.

In the above solutions, the third sealing member 643 is used for preventing the water in the filter chamber 610 from leaking from the installation port 6104.The second bearing 632 can support the rotating support part 622, ensuring that the rotation of the rotating support part 622 relative to the sleeve part 612is smoother. The second bearing 632 is arranged on the right side of the third sealing member 643 and does not contact with the water in the filter chamber 610.

In the preferred solution of this embodiment, the inner diameter of the end of the sleeve part 612 away from the filter chamber 610 is smaller than the inner diameter of the other end, the annular structure is formed on the inner wall of the sleeve part 612, and the fifth limiting surface 605 of thesleeve part 612 is perpendicular to the axis of the rotating support part 622. A surface of the third sealing member 643 facing the outside of the filter chamber 610 abuts against the fifth limiting surface 605.

The outer diameter of one end of the rotation support part 622 close to the filter chamber 610 is larger than the outer diameter of the other end, the annular structure is formed on the outer wall of the rotating support part 622, and a sixth limiting surface 606 of the rotation support part is perpendicular to the axis of the rotation support part 622. The surface of the second bearing 632 facing the inside of the filter chamber 610 abuts against the sixth limiting surface 606.

In the above solution, the inner diameter of the right end of the sleeve part 612 is smaller than the inner diameter of the left end, and the fifth limiting surface 605 toward the left side is formed at an abrupt change in the inner diameter of the sleeve part 612 and abuts against the right side surface of the third sealing member 643. The outer diameter of the right end of the rotating support part 622 is smaller than the outer diameter of the left end, and the sixth limiting surface 606 toward the right side is formed at an abrupt change in the outer diameter and abuts against the left surface of the second bearing 632. The above structure restricts the movement of the third sealing member 643 and the second bearing 632 in the axial direction of the rotating support part 622, and the structure is stable.

In this embodiment, the first sealing member 641, the second sealing member 642 and the third sealing member 643 are all oil seals. The right wall of the filter chamber 610 is arranged seperately from the peripheral side wall. The filter mechanism 620, and the first sealing member641, the second sealing member642 and the first bearing 631 on the left side are first installed in the interior of the filter chamber 610 as a whole, and the third sealing member643 and the second bearing 632 are installed on the right side of the filter chamber, and finally the right wall of the filter chamber 610 is buckled with the peripheral side wall fasten.

In this embodiment, the cross-sectional area of the middle region of the filter screen support part 623 is constant, and a cone structure is located on the left end and the right end, so that the partial surface of the filter screen 625 is inclined to facilitate to make the attached lint fall off.

In this embodiment, the direction of the water inlet 6101 and the sewage outlet 6103 on the filter chamber 610 is perpendicular to the axial direction of the filter mechanism 620.

Preferably, the filter chamber 610 has a cylindrical structure, the water inlet 6101 is arranged near the right end of the filter chamber 610, the sewage outlet 6103 is arranged near the left end of the filter chamber 610, and the water inlet 6101 and the sewage outlet 6103 are symmetrically located around the peripheral direction of filter chamber 610.

In the above scheme, the position of the water inlet 6101 is as far away from the water outlet joint 621 as possible, so that the area of the filter screen 625 can be fully utilized. The water inlet 6101 and the sewage outlet 6103 are set on the upper and the bottom respectively, and are staggered in the axial direction of the filter chamber 610, which is beneficial to fully discharge the sewage in the filter chamber 610after cleaning the filter device 600.

In a further solution of this embodiment, the outer wall of the sealing support part 611 is provided with a reinforcing rib 613 extending in radial direction of the sealing support part 611, and the reinforcing rib 613 is connected with the surface of the filter chamber 610 where the filtered water outlet 6102 is located.

Since the sealing support part 611 is extended out from the left side of the filter chamber 610 by a certain length, the reinforcing rib 613 supports the peripheral side wall of the sealing support part on the outside, ensuring the strength of the sealing support part 611.

In this embodiment, the filter mechanism 620 is rotatably arranged in the filter chamber 610 of the filter device 600. After the washing water to be filtered enters the filter chamber 610, the filtered water after removing the lint enters the filter mechanism 620 and flows out through the water outlet joint 621. The filtered lint is attached to the outer surface of the filter mechanism 620. By driving the filter mechanism 620 to rotate, the lint can be peeled off and discharged from the sewage outlet 6103 along with the water in the filter chamber 610.The self-cleaning function of the filter device 600 is realized without cleaning up manually by the user.

Both ends of the filter mechanism 620 are respectively provided with the first bearing 631 and the second bearing 632 for supporting, to ensure the smooth and stable rotation of the filter mechanism 620 in the filter chamber610. At the same time, through the arrangement of the first sealing member 641, the second sealing member 642 and the third sealing member 643, the first bearing 631 and the second bearing 632 are prevented from being in contact with water, and failure of both is avoided.

### Embodiment 2

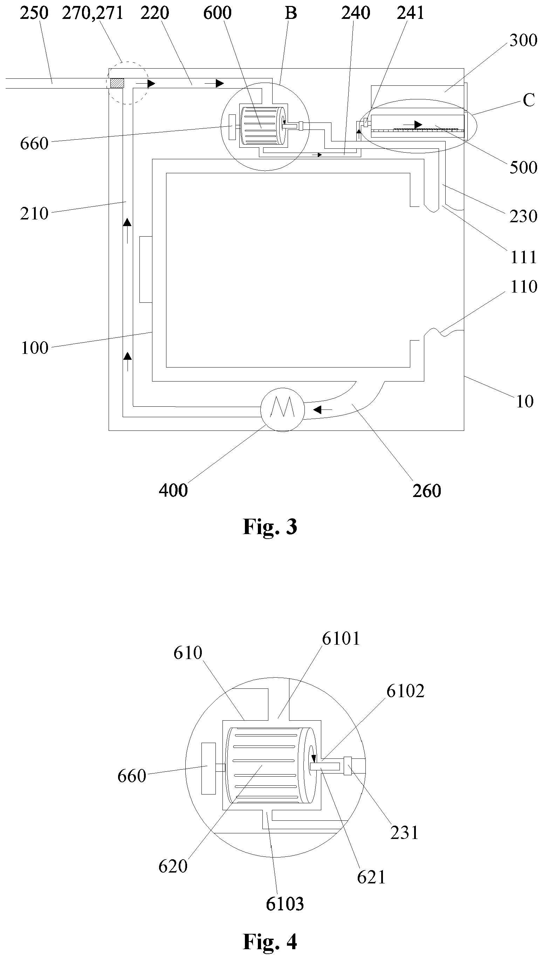

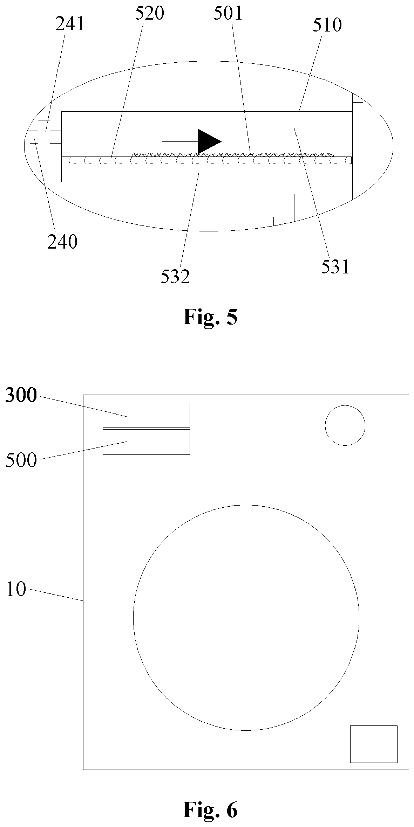

As shown in Figures 3 to 6, the washing machine in this embodiment includes:
water holding barrel 100,
the filter device 600, communicated with the water holding barrel 100 and being for filtering the water from the water holding barrel 100; and
the recovery device 500, communicated with the sewage outlet 6103 of the filter device 600 to collect the filtered impurities 501 discharged from the filter device 600.

In this embodiment, the filter device 600 of the above Embodiment is used. The washing machine is provided with a circulation filter pipeline of which two ends are respectively communicated with the water holding barrel 100, and the filter device 600 is arranged on the circulation filter pipeline. A circulation pump 400 is also arranged in the circulation filter pipeline. The circulation pump 400 drives the water in the water holding barrel 100 to continuously circulate through the circulation filter pipeline. When passing through the filter device 600, water is filtered to remove the filtered impurities 501 therein such as lint, so as to reduce the lint content in the water and improve the washing effect of laundry.

A recovery device 500 of the washing machine is communicated with the sewage outlet 6103 of the filter device 600. After being discharged from the sewage outlet 6103, the filtered impurities 501 are collected in the recovery device 500 instead of entering the drainage water flow, and are discharged out of the washing machine along the drainage water flow. Through the above method, it is avoided that the fine lint in the filtered impurities 501 is discharged with the water flow and enters the ecological environment, thereby causing harm to the ecological environment and human health.

In this embodiment, the filter device 600 is installed horizontally, that is, the water inlet 6101 on the filter chamber 610 faces upward, and the orientation of the filtered water outlet 6102 is parallel to the horizontal direction.

In a further solution of this embodiment, the recovery device 500 includes:
a housing 510, having a recovery chamber inside;
a filter assembly 520, arranged in the recovery chamber and dividing the recovery chamber into a first chamber 531 and a second chamber 532.

The sewage outlet 6103 of the filter device 600 is communicated with the first chamber 531. The sewage carrying the filtered impurities 501 enters the first chamber 531, and enters the second chamber 532 after being filtered by the filter assembly 520. The filtered impurities 501 are collected in the first chamber 531.

In the above solution, the recovery device 500 is provided with the filter assembly 520 for filtering the sewage discharged from the filter device 600 and separating the filtered impurities 501 therein from the sewage. The interior of the recovery device 500 is divided into the first chamber 531 and the second chamber 532 by the filter assembly 520, and the filtered impurities 501 in the sewage are blocked by the filter assembly 520, thereby collecting the filtered impurities 501 on the upper surface of the filter assembly 520 in the first chamber 531, and the clean water obtained after filtration is collected in the second chamber 532. The user can directly treat the filtered impurities 501. So it is avoided the situation that the filtered impurities 501 are mixed in water and cannot be effectively treated.

Specifically, the filter assembly 520 may be a frame horizontally arranged at a certain height in the recovery chamber and a filter net covering on the frame. After the sewage carrying the filtered impurities 501 enters the first chamber 531, the water enters the second chamber 532 through the filter assembly 520, and the filtered impurities 501 are blocked by the filter net and remained on the upper surface of the filter assembly 520.

In this embodiment, the washing machine further includes a shell 10, and the water holding barrel 100 and the filter device 600 are both arranged in the shell 10. The recovery device 500 can be inserted in and extracted from the shell 10, and the user can pull the recovery device 500 out of the shell 10 for cleaning.

Specifically, the housing 510 of the recovery device 500 is capable of being inserted in and extracted from the shell 10, and the upper side of the casing 510 has an opening. When the user pulls out the housing 510 from the shell 10, the filtered impurities 501 adhering to the upper surface of the filter assembly 520 can be cleaned through the opening on the upper side of the housing 510. The filter assembly 520 is preferably detachably connected to the housing 510.The user can disassemble the filter assembly 520 from the inside of the housing 510 and take it out for cleaning, which is more convenient to operate.

In a preferred solution of this embodiment, a water outlet is provided on the second chamber 532 for discharging the clean water. By arrangement of the water outlet on the second chamber 532, the clear water entering the second chamber 532 can be discharged from the recovery device 500 in time, so as to prevent the recovery device 500 from overflowing with water when the larger amount of sewage is discharged from the filtering device 600. Otherwise, the capacity of the second chamber 532 needs to be increased, that is, the volume of the recovery device 500 needs to be increased. As a result, the recovery device occupies a large space inside the washing machine, which is not beneficial to the miniaturization of the overall volume of the washing machine.

On the other hand, the water in the second chamber 532 can be automatically discharged from the water outlet. When the user cleans the recovery device 500, the user only needs to clean the filtered impurities 501 on the filter assembly 520 without pouring the water out of the second chamber 532 manually. When the filter assembly 520 is detachably installed in the housing 510, there is even no need to completely take the housing 510 out of the shell 10 of the washing machine for users, but only need to take out the filter assembly 520 for cleaning, which is more convenient to operate.

In this embodiment, the washing machine further includes a detergent box 300, and the detergent box 300 is communicated with the water holding barrel 100 through a pipeline. The second chamber 532 is communicated with the detergent box 300, and the clean water being filtered flows into the detergent box 300 from the second chamber 532, and then enters the water holding barrel 100.

In the above solution, the second chamber 532 is communicated with the detergent box 300, and the collected clean water can be passed into the detergent box 300, and then delivered into the water holding barrel 100 through the pipeline for connecting the detergent box 300 with the water holding barrel 100. Since the sewage entering in the recovery device 500 is filtered by the filter assembly 520 in the recovery device 500, the filtered impurities 501 have been removed, and the water collected in the second chamber 532 is clean water without filtered impurities 501. The filtered clean water is delivered into the water holding barrel 100 through the detergent box 300, to realize the reuse of the clean water. Thereby the amount of water intake required is reduced in the continuous operation of the washing machine, and the purpose of saving the water consumption of the washing machine is achieved.

In this embodiment, the filter device 600 is arranged above the water holding barrel 100, and the recovery device 500 and the detergent box 300 are both arranged at the top area of the shell 10 of the washing machine.

Specifically, the recovery device 500 and the detergent box 300 in this embodiment are arranged up and down in the shell 10, and a pathway for allowing the filtered clean water to pass through is arranged between them. Preferably, the pathway through which the filtered clean water passes is extended vertically.

In one solution of this embodiment, the detergent box 300 is arranged above the recovery device 500, and a power device is arranged in the pathway between them for delivering the clean water in the second chamber 532 to the detergent box 300 along the pathway.

In another solution of this embodiment, the detergent box is arranged under the recovery device, and the pathway between them is extended vertically. The clean water in the second chamber can enter the detergent box along the pathway under the action of gravity.

In this embodiment, the recovery device 500 in the washing machine is communicated with the sewage outlet 6103 of the filter device 600. The sewage carrying the filtered impurities 501discharged from the filter device 600 can be passed into the recovery device 500 for collection, and but does not flow into the drainage water flow of the washing machine and flow directly out. In this way, it is avoided that the fine lint in the filtered impurities 501 enters the environment along the drainage water flow and affects the ecological environment and human health. The recovery device 500 is provided with the filter assembly 520 to filter the collected sewage, so as to separate the filtered impurities 501 from water and easily clean the filtered impurities 501. Simultaneously, the recovery device 500 is connected with the detergent box 300, and the filtered clean water passes through the detergent box 300 into the water holding barrel 100 for reuse. So, the water consumption of the washing machine is saved.

### Embodiment 3

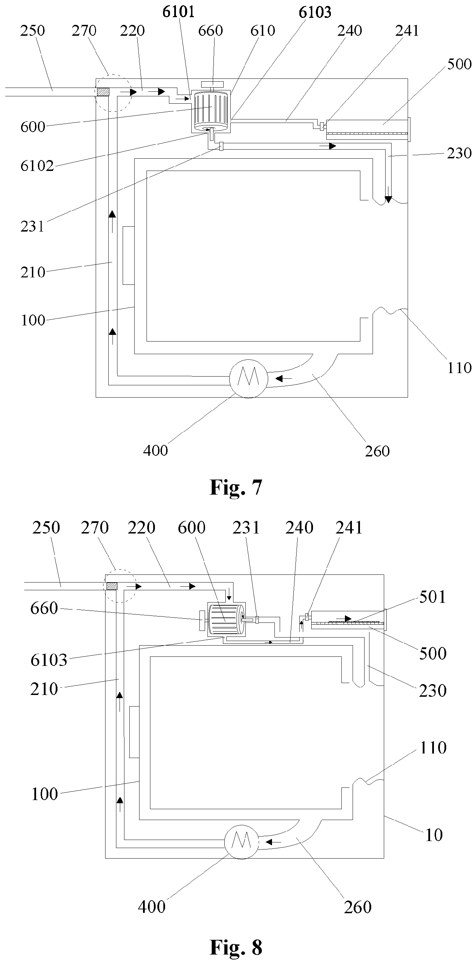

As shown in Figure 7, the difference between this embodiment and the Embodiment 2 is that the filter device 600 is installed vertically in the washing machine. Specifically, the orientation of the water inlet 6101 and the sewage outlet 6103 on the filter chamber 610 is in horizontal direction, and the water inlet 6101 is higher than the sewage outlet 6103, and the filtered water outlet 6102 is set downward.

### Embodiment 4

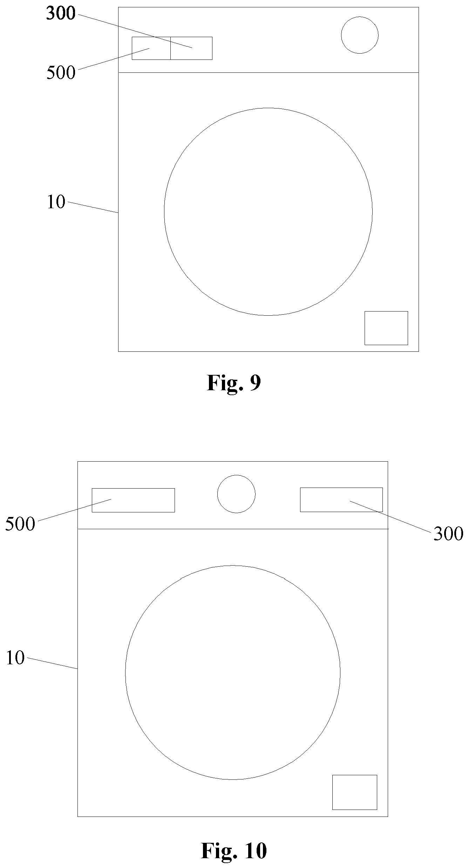

As shown in Figure 8 and Figure 9, the difference between this embodiment and the Embodiment 2 is that: the recovery device 500 is arranged on one side of the detergent box 300 in the horizontal direction, and the pathway through which the filtered clean water passes is arranged between them.

Preferably, the pathway through which the filtered clean water passes is extended horizontally, so that the filtered clean water in the recovery device 500 enters the detergent box 300 through the pathway, and then flows into the water holding barrel 100.

In this embodiment, the detergent box 300 can be arranged separately from the housing 510 of the recovery device 500. Both the detergent box 300 and the recycling device 500 can be inserted into and extracted out of the shell 10 of the washing machine independently.

In another solution of this embodiment, the detergent box 300 and the housing 510 of the recovery device 500 are integrally arranged, preferably both are integrally formed. The detergent box 300 and the recovery device 500 are inserted into and extracted out of the shell 10 of the washing machine synchronously by the user's operation.

In this embodiment, the detergent box 300 and the recovery device 500 are arranged side by side in a horizontal direction, so that the detergent box and the recovery device can be drawn out from the shell 10 at the same time without mutual interference. That is, no one of them is blocked by the other one, so the operation of the user is not affected. The detergent box 300 and the housing 510 of the recovery device 500 are provided as an integrated structure, which is convenient for the user to extractthem out or insert them into the shell 10 at the same time, and the operation is simpler.

### Embodiment 5

As shown in Figures 8 and 10, the difference between this embodiment and Embodiment 2 is that: the second chamber 532 is communicated with the water holding barrel 100 through a pipeline (not shown in the figure), and the filtered clean water is directly delivered into the water holding barrel 100.

In this embodiment, the recovery device 500 and the detergent box 300 are both arranged in the top area of the shell 10 of the washing machine. As shown in Figure 10, viewed from the front side of the washing machine, the recovery device 500 and the detergent box 300 are respectively arranged on both sides of the top area of the shell 10. That is, the recovery device 500 is arranged on the left side near the top area, and the detergent box 300 is arranged on the right side near the top area.

Since the distance between the recovery device 500 and the detergent box 300 is relatively long, the second chamber 532 of the recovery device 500 is directly connected with the water holding barrel 100 through a pipeline at this time, and the filtered clean water is delivered into the water holding barrel 100. Compared with the way of connecting the recovery device 500 and the detergent box 300 through pipeline, the length of the pipeline is shorter and the structure is simpler.

In the specific solution of this embodiment, a first water return hole is provided on the water holding barrel 100. The filtered clean water in the second chamber 532 enters the water holding barrel 100 through the first water return hole.

Alternatively, a window pad 110 is provided on the opening of the water holding barrel 100, and a second water return hole is provided on the window pad 110. The filtered clean water in the second chamber 532 enters the water holding barrel 100 through the second water return hole.

In this embodiment, the filter device 600 is communicated with the water holding barrel 100 through the return water pipeline 230, for delivering the water filtered by the filter device 600 back to the water holding barrel 100. The window pad 110 located on the opening of the water holding barrel 100 is provided with a window pad return port 111 communicating with the water holding barrel 100. The water outlet end of the water return pipeline 230 is specifically connected with the window pad return port 111.

In another scheme of this embodiment, the water outlet of the pipeline for connecting the second chamber 532 of the recovery device 500 with the water holding barrel 100 can be connected to the water return pipeline 230, and the clean water in the second chamber 532 is delivered in the water holding barrel 100 through the water return pipeline 230.

In the above solution, in order to circularly filter the water in the water holding barrel 100, the window pad 110 is provided with a window pad return water outlet 111 for receiving the returned water after being filtered. The pipeline connected with the second chamber 532 is directly with the return water pipeline 230. The clean water in the recovery device 500 is delivered into the water holding barrel 100 by the existing pipeline structure and the window pad return port 111, so the pipeline newly added is reduced, there is no need to additionally arrange an opening on the water holding barrel 100, and the structure is simpler.

In this embodiment, the return water pipeline 230 is also provided with a return water control valve 231 for controlling to cut on and off the return water pipeline 230. When water in the filter device 600 is drained to the recovery device 500, the return water control valve 231 is closed to ensure that all the water in the filter device 600 is discharged into the recovery device 500, and not enters the water holdingbarrel 100 along the return water pipeline 230. So the efficiency of removing the filtering impurities 501 in the filtering device 600is ensured.

The water outlet of the pipeline for connecting the second chamber 532 of the recovery device 500 with the water holding barrel 100 is connected with the return water pipeline 230 in downstream of the return water control valve 231. When the return water control valve 231 is cut off, the water flow from the device 600 to the return water pipeline 230 is blocked, and the filtered clean water in the recovery device 500 is not blocked from entering the water holding barrel 100 along the return water pipeline 230.

### Embodiment 6

The difference between this embodiment and the Embodiment 2 is that: the washing machine further includes a main drainage pipeline that drains water to the outside, and the second chamber is communicated with the main drainage pipeline through a pipeline.

In this embodiment, through the pipeline, the second chamber is communicated with the main drainage pipeline through which water is drained to the outside. The water in the second chamber can be directly discharged out of the washing machine through the main drainage pipeline. Since the sewage entering the recovery device is filtered by the filter assembly, the filtered impurities are attached on the surface of the filter assembly, and the clean water without filtered impurities enters the second chamber and is directly discharged. The fine lint cannot enter the environment. At the same time, the problem of overflowing water from the recovery device is also avoided, and the operation of manually pouring the water out of the second chamber by user can be omitted.

### Embodiment 7

The difference between this embodiment and Embodiment 2 is that: the recovery device is arranged inside the detergent box, and includes a filter assembly that can filter the sewage carrying filtered impurities.

The sewage in the recovery device is filtered through the filter assembly, and the filtered clean water enters the water holding barrel through the detergent box.

Specifically, the filter assembly can be added in the detergent box, and the filter assembly divides the inner space of the detergent box into an upper space and a lower space. The pipeline for connecting the detergent box with the water holding barrel is connected with the lower space of the detergent box. The detergent accommodating chamber is also located in the lower space. The sewage outlet of the filter device is connected with the upper space. The sewage from the filter device enters the upper space, and passes through the filter assembly. The filtered impurities are adhered to the surface of the filter assembly, and the clean water enters the lower space through the filter assembly, and then is delivered into the water holding barrel.

In this embodiment, the recovery device is arranged inside the detergent box, which makes full use of the space inside the detergent box. Thereby the installation space inside the washing machine is saved, and the filtered impurities are collected, and the filtered clean water is reused.

### Embodiment 8

As shown in Figure 3 and Figure 4, this embodiment is further described based on Embodiment 2. The filtered water outlet 6102 of the filter device 600 is connected to the return water pipeline 230, and the water outlet of the return water pipeline 230 is connected with the water holding barrel 100. The filtered water in the filtering device 600 is delivered into the water holding barrel 100. A return water control valve 231 is provided in the return water pipeline 230 for controlling to cut on or off the return water pipeline 230.

In this embodiment, a circulation pump 400 is provided on the pipeline connecting the water holding barrel 100 with the water inlet 6101 of the filter device 600. When the circulation pump 400 is turned on, the water to be filtered in the water holding barrel 100 passes into the filter device 600 through the pipeline. The water carrying impurities such as lint is filtered by the filter device 600 to remove the impurities, and then the filtered water returns to the water holding barrel 100 through the return water pipeline 230. During the washing and rinsing process of the washing machine, the water in the water holding barrel 100 is driven to circularly flow through the filter device 600, to reduce the content of lint in the water and improve the washing effect.

It can be understood that the circulation pump can also be arranged on the return water pipeline, which takes the same effect.

Further, a window pad 110 is provided at the opening of the water holding barrel 100, and the filtered water delivered in the return water pipeline 230 enters the water holding barrel 100 through the window pad 110.

Specifically, the window pad 110 is provided with a window pad return port 111 being communicated with the water holding barrel 100, and the water outlet of the return water pipeline 230 is connected with the window pad return port 111.

Preferably, the window pad return port 111 is disposed on the top area of the window pad 110.

In the above solution, the return water pipeline 230 is connected with the window pad return port 111 on the window pad 110. The filtered water flows out of the return water pipeline 230, and flow through the inner surface of the window pad 110 into the water holding barrel 100. In this way, in the process of returning water to the water holding barrel 100, the window pad 110 is also washed. So it is avoided that dirt is accumulated on the inside of the window pad 110, especially in the folded position, and the cleanliness of the window pad 110 can be ensured.

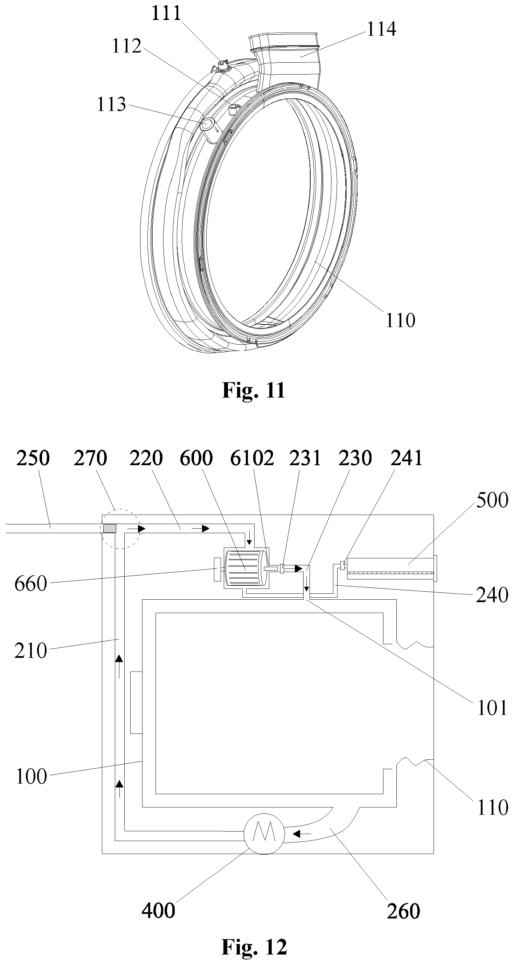

In detail, as shown in Figure 11, a spray head assembly 112 is provided on the window pad 110 in this embodiment. The spray head assembly 112 is connected to a spray pipeline for delivering water, so as to spray the laundry. A downlight 113 is also arranged on the window pad 110. The downlight 113 can illuminate the interior when the user opens the door of the washing machine, which is convenient for the user to take out or place the laundry.

The washing machine in this embodiment also has the function of drying laundry. A drying air duct being communicated with the water holding barrel 100 is arranged inside the washing machine. Wherein, the inlet 114 of the drying air duct is also connected with the window pad 110 to supply the drying air into the water holding barrel 100 through the drying air duct.

In another solution of this embodiment, the window pad may not be separately provided with a window pad return port, but the water outlet of the return water pipeline may be directly connected with the spray head assembly on the window pad. The water in the return water pipeline passes through the spray head assembly and is sprayed in the water holding barrel. Thereby water is sprayed on the laundry for washing while returning in the water holding barrel, without the need to separately feed water from the outside of the washing machine for spraying. Water consumption is saved in washing laundry.

In still another solution of this embodiment, the spray head assembly is connected with the spray pipeline for supplying water, and the water outlet of the return water pipeline is connected with the spray pipeline. When the water in the water holding barrel is circularly filtered, the water in the return water pipeline is delivered into the spray pipeline, and then the laundry can be sprayed through the spray head assembly. When the circulation pump is not working, that is, when there is no the filtered water in the return water pipeline, water can also be fed from the outside of the washing machine. Water can be fed to the spray head assembly through the spray pipeline to realize the spray function. No matter whether the water in the water holding barrel of the washing machine is circularly filtered, the spraying function is not affected.

### Embodiment 9

As shown in Figure12, the difference between this embodiment and Embodiment 8 is that: the water holding barrel 100 is provided with a return port 101 of the water holding barrel, and the water outlet of the return water pipeline 230 is connected with the return port 101 of the water holding barrel.

In a preferred solution of this embodiment, the return port 101 of the water holding barrel is arranged on the barrel wall of the water holding barrel 100.

In this embodiment, the filter device 600 is arranged above the water holding barrel 100, and is located in the middle area of the water holding barrel 100 in the axial direction of the water holding barrel 100. Compared with the solution of returning water through window pad 110, the distance between the filtered water outlet 6102 of the filter device 600 and the return port 101 of the water holding barrel is shortened. Thereby the length of the return water pipeline 230 is reduced and the waterway structure is simplified.

In a further solution of this embodiment, a buffer member (not shown in the figure) is provided at the water outlet of the return water pipeline 230, and the return water pipeline 230 is connected with the return port 101 of the water holding barrel through the buffer member.

Preferably, the buffer member is a bellows with a certain length.

The water holding barrel 100 vibrates to a certain extent during the operation of the washing machine. In the above solution, the return water pipeline 230 is connected with the return port 101 of the water holding barrel through the buffer member, so that the buffer can buffer the vibration of the water holding barrel 100 to a certain extent. For example, a bellows of a certain length is provided at the water outlet of the return water pipeline 230, and the bellows is connected to the return port 101 of the water holding barrel. The displacement generated by the vibration of the water holding barrel 100 can be absorbed by the bellows, so it is avoided that the vibration of the water holding barrel 100 causes the connection between the return water pipeline 230 and the return port 101 of the water holding barrel to loosen and result in water leakage.

### Embodiment 10

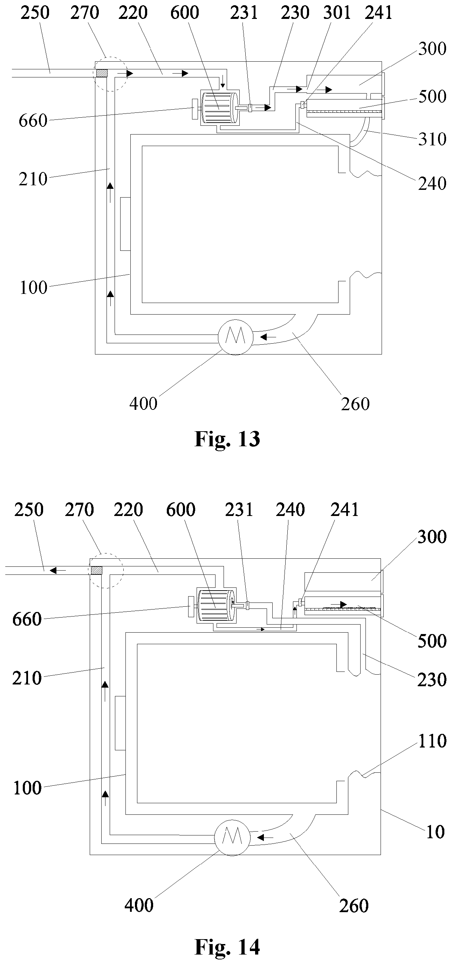

As shown in Figure 13, the difference between this embodiment and Embodiment 8 is that: the washing machine further includes a main water inlet pipeline connected with an external water source. The water outlet of the return water pipeline 230 is connected with the main water inlet pipeline. The main water inlet pipeline is used to feed the external water into the water holding barrel 100.

Further, a detergent box 300 is provided in the main water inlet pipeline, the water inlet of the detergent box 300 is communicated with the external water source, and the water outlet the detergent box is communicated with the water holding barrel 100.

Specifically, the main water inlet pipeline includes:
the first water inlet pipe (not shown in the figure), of which two ends are connected with the water inlet valve of washing machine and the water inlet of detergent box 300; and
the second water inlet pipe 310, of which two ends are respectively connected with the water outlet of the detergent box 300 and the water inlet of the water holding barrel 100.

The detergent box 300 is provided with a filtered water inlet 301, and the outlet of the return water pipeline 230 is connected with the filtered water inlet 301. The filtered water delivered in the return water pipeline 230 enters the water holding barrel 100 through the detergent box 300.

In this embodiment, the return water pipeline 230 is connected with the detergent box 300, and the filtered water first enters the detergent box 300, and then enters the water holding barrel 100 from the detergent box 300. In the process of returning water, the inside of the detergent box 300 can be further flushed to completely dissolve the detergent.

### Embodiment 11

As shown in Figures 3 and 4, this embodiment is a further limitation of Embodiment 2, and the washing machine also includes:
an external drainage pipeline 250, used for draining water to the outside of the washing machine; and
a switching device 270, controlling one of the filter device 600 and the external drainage pipeline 250 to be connected to the water holding barrel 100.

In the above solution, a switching device 270 is arranged inside the washing machine to control the flow direction of the water flowing out of the water holding barrel 100. As shown in Figure 3, when the water holding barrel 100 is communicated with the filter device 600 by the switching device 270, the water in the water holding barrel 100 is delivered into the filter device 600. As shown in Figure 14, when the water holding barrel 100 is communicated with the external drainage pipeline 250 by the switching device 270, the water in the water holding barrel 100 can be directly discharged out of the washing machine through the external drainage pipeline 250. Through the above setting, there is no need to set up the drainage waterway and the circulation waterway completely independent with each other inside the washing machine, but the drainage waterway and circulation waterway can share part of the pipelines, which simplifies the pipeline distribution in the washing machine and saves installation space.

In the specific solution of this embodiment, the switching device 270 is a switching valve assembly 271, including:
a water inlet, being communicated with the water holding barrel 100 through a pipeline;
a first water outlet, being communicated with the filter device 600;
a second water outlet, being communicated with the external drainage pipeline 250; and
a switching mechanism, controlling one of the first water outlet and the second water outlet to be communicated with the water inlet.

A circulation pump 400 is arranged between the water inlet of the switching valve assembly 271 and the water holding barrel 100.

In detail, the water holding barrel 100 is provided with a drainage pipe 260 of the water holding barrel. The drainage pipe 260 of the water holding barrel is connected with the water inlet of the circulation pump 400, and the water outlet of the circulation pump 400 is connected with the drainage pipeline 210. The drainage pipeline 210 is connected with the water inlet of the switching valve assembly 271. The first water outlet of the switching valve assembly 271 is connected with the circulation pipeline 220, and the circulation pipeline 220 is connected with the water inlet 6101 of the filter device 600. The second water outlet of the switching valve assembly 271 is directly connected with the external drainage pipeline 250.

In the above solution, the switching valve assembly 271 is used as the switching device for controlling the flow direction of the water, which has a simple structure and low production cost, and is easy to be installed. In this embodiment, the filter device 600 is arranged above the water holding barrel 100, and the external drainage pipeline 250 is also arranged in the upper area of the washing machine, so the circulation pump 400 is required to deliver the water in the water holding barrel 100 upward along the pipeline. The switching valve assembly 271 is arranged downstream of the circulation pump 400 to control the flow direction of the water. One circulation pump 400 is installed in the washing machine to realize the two purposes of guiding water to the filter device 600 and draining water to the outside. So the number of pumps is decreased and the production cost is reduced.

In this embodiment, the filtered water outlet 6102 of the filter device 600 is communicated with the water holding barrel 100 through the return water pipeline 230, and the return water control valve 231 is provided on the return water pipeline 230. The sewage outlet 6103 of the filter device 600 is communicated with the recovery device 500 through the sewage pipeline 240, and a sewage control valve 241 is arranged in the sewage pipeline 240.

The water holding barrel 100 is communicated with the filter device 600 by the switching device 270. When the return water pipeline 230 is open by the return water control valve 23 land the sewage control valve 241is close, the water in the water holding barrel 100 is passed into the filter device 600 for filtration, and the filtered water flows back to the water holding barrel 100 through the return water pipeline 230.

The water holding barrel 100 is communicated with the filter device 600 by the switching device 270. When the return water control valve 231 is closed and the sewage pipe 240 is open by the sewage control valve 241, the water in the water holding barrel 100 is passed into the filter device 600 for cleaning the filter device 600, and then passed into the recovery device 500 by the sewage pipeline 240.

In this embodiment, by setting the switching device, specifically, the switching valve assembly 271 is used to control the connection of the internal water pipelines of the washing machine, so as to control the flow direction of the water flowing out of the water holding barrel 100. Thereby, this can simplify the pipeline distribution in the washing machine and facilitate installation. At the same time, one circulation pump 400 combining with the switching valve assembly 271 can realize two purposes of guiding water to the filter device 600 and draining water to the outside of the washing machine, which reduces the production cost. The filter device 600 is connected to the return water pipeline 230 which is communicated with the water holding barrel 100, and connected with the recovery device 500 by the sewage pipeline 240. Control valves are set on the two pipelines to control to cut on and cut off, so as to control the flow direction of water from the filter device 600. So it is ensured that the filter device 600 drains water outward through the corresponding outlets, so as to realize the functions of filtering washing water and self-cleaning.

### Embodiment 12

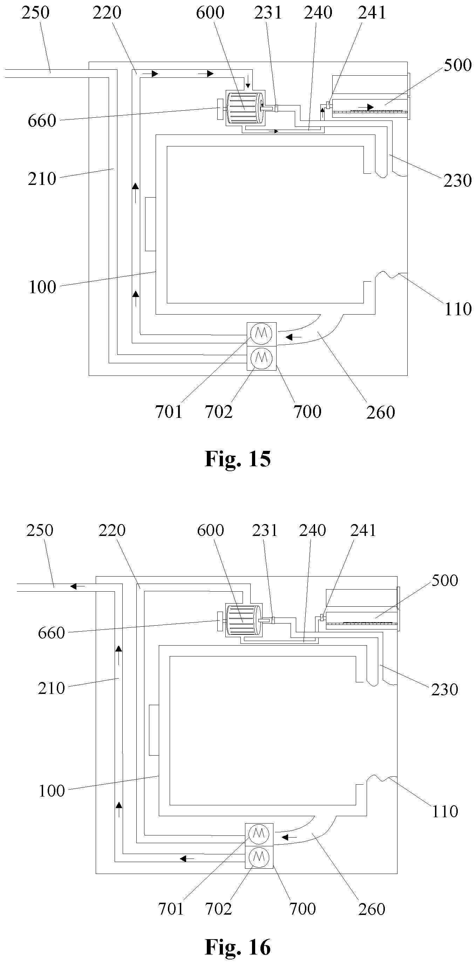

As shown in Figures 15 to 17, the difference between this embodiment and Embodiment 11 is that: the switching device is a circulation drainage pump 700. The circulation drainage pump 700 specifically includes:
a pump assembly 710, provided with a pump inlet 723 communicated with the water holding barrel 100, a circulation water port 721 communicated with the filtering device 600, and a drain port 722 communicated with the external drainage pipeline 250;
a circulation motor 701, installed on the pump assembly 710 at a position corresponding to the circulation water port 721 to control to open and close the circulation water port 721; and
a drain motor 702, installed on the pump assembly 710 at a position corresponding to the drain port 722 to control to open and close the drain port 722.

In the above solution, the integrated circulation drainage pump 700 is used as the switching device. When the circulation motor 701 is turned on, the water in the water holding barrel 100 can be pumped into the pump assembly 710 through the pump inlet 723, and then pumped out from the circulation water port 721, thereby water is delivered into the circulation pipeline 220 and then delivered to the filter device 600. When the drainage motor 702 is turned on, water pumped into the pump assembly 710 is pumped out from the drain port 722, delivered into the external drainage pipeline 250, and then drained out of the washing machine. The above method reduces the number of water pumps in the washing machine, thereby saving installation space and reducing installation difficulty.

In a further solution of this embodiment, the water holding barrel 100 is provided with a drainage pipe 260 of the water holding barrel, and the drainage pipe 260 of water holding barrel is connected to the pump inlet 723. The circulation water port 721 is communicated with the filter device 600 through the circulation pipeline 220. The drain port 722 is communicated with the external drainage pipeline 250 through the drainage pipeline 210.

In this embodiment, the pump assembly 710 of the circulation drainage pump 700 specifically includes:
a pump body 713,being a hollow columnar structure with a certain length, of which one end is closed, and the side wall close to the other end is provided with the pump inlet 723;
a circulation motor installation part 711, arranged on the side wall close to the closed end of the pump body 713, and having a circulation motor installation port communicated with the inside of the pump body 713, wherein, the direction of the circulation motor installation port is perpendicular to the length direction of the pump body 713, and the circulation water port 721 is arranged on the side wall of the circulation motor installation part 711; and
a drainage motor installation part 712, arranged on the end of the pump body 713 where the pump inlet 723 is located, and having a drainage motor installation port communicated with the inside of the pump body 713, wherein the direction of the drainage motor installation port is parallel with the length direction of the pump body 713, the drain port 722 is provided on the side wall of the drain motor installation part 712.

Preferably, the directions of the pump inlet 723 and the circulation water port 721 are parallel to each other, and the direction of the drain port 722 is perpendicular to the direction of the pump inlet 723.

In detail, the output end of the circulation motor 701 is arranged in the circulation motor installation part 711, and is connected with the circulation pump wheel. The circulation water port 721 is located on the outer periphery of the circulation pump wheel. The circulation motor 701 is turned on to drive the circulation pump wheel to rotate, and water entering in the pump body 713 is pumped out through the circulation water port 721.

Similarly, the output end of the drainage motor 702 is disposed in the drainage motor installation part 712 and connected to the drainage pump wheel, and the drain port 722 is located on the outer periphery of the drainage pump wheel. The drainage motor 702 is turned on to drive the drainage pump wheel to rotate, and water entering in the pump body 713 is pumped out through the drain port 722.

In this embodiment, on circulation drainage pump 700 with an integrated structure is installed in the washing machine. By controlling the opening and closing of the circulation motor 701 and the drainage motor 702, the circulation drainage pump 700 can be controlled to deliver water in different directions, and then water in the washing machine can be controlled to flow to the filter device 600 or drain outward. By reducing the number of water pumps, the installation space in the washing machine is saved, and the production cost is reduced, and the control logic of the washing machine is simple and easy to implement.

### Embodiment 13

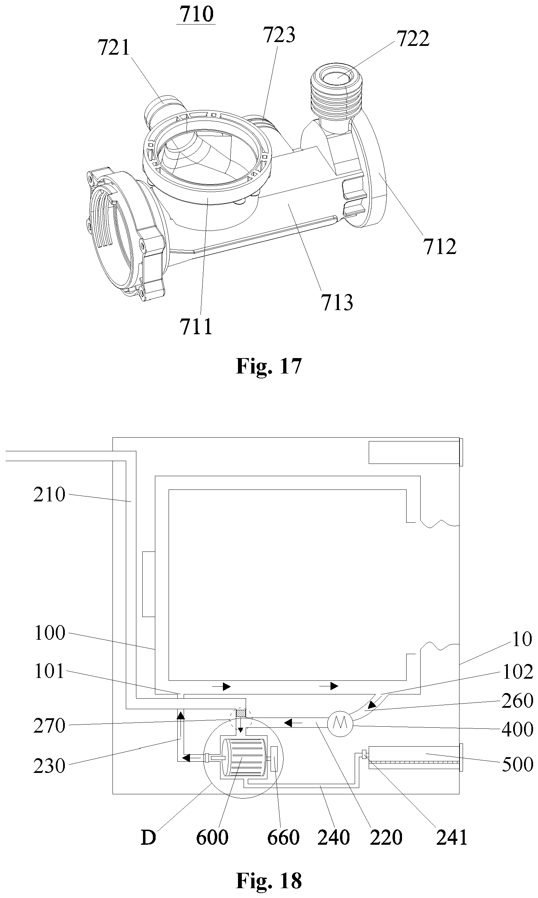

As shown in Figures 18 to 20, the difference between this embodiment and Embodiment 2 is that: the water inlet and the water outlet of the circulation filter pipeline are respectively connected with the bottom area of the water holding barrel 100.

In the above solution, the water in the water barrel 100 is driven to continuously circularly pass through the filter device 600 to filter out the lint of the water, and the water without lint can be delivered back to the water holding barrel 100. Thereby the content of lint in the water is reduced, and the lint does not adhere on the surface of the washed laundry and the user experience is improved. Both ends of the circulation filter pipeline are connected with the bottom area of the water holding barrel 100, so that flowing the water back to and out of the water holding barrel 100 is both carried out in the bottom area during the circulation process. The water flow from formed from the water returning position to the water outlet position is formed in the bottom area of the water holding barrel 100. The flowing of the water flow can strengthen the flow of the water in the water holding barrel 100, and the washing effect is improved.

In a further solution of this embodiment, a water outlet 102 of the water holding barrel 100 is provided at the bottom area of the wall of the water holding barrel 100, and is connected with the water inlet of the circulation filter pipeline. The bottom area of the wall of the water holding barrel 100 is also provided with a return port 101 of the water holding barrel, the return port is connected with the water outlet of the circulation filter pipeline.

In the preferred solution of this embodiment, the water outlet 102 of the water holding barrel is arranged close to the opening of the water holding barrel 100, and the return port 101 of the water holding barrel is arranged close to the rear of the water holding barrel 100.

During the circulating process, the water in the bottom area of the water holding barrel 100 forms a flow from the return port 101 the water holding barrel to the water outlet 102 of the water holding barrel. The water outlet 102 of the water holding barrel is arranged in the bottom area of the wall of the water holding barrel 100 close to the mouth of the barrel, and the return port 101 of the water holding barrel is arranged in the bottom area of the wall of the water holding barrel 100 near the rear of the barrel, so that the distance between them is as far as possible, and the water flow flowing from the rear of the barrel to the opening of the barrel is formed. The flowing distance of the water flow in the bottom of the water holding barrel 100 is longer, and the area covered by the water flow is larger.

When feeding water in the washing machine, especially when water in the water holding barrel 100 is circulated in the process of feeding water, the water flows in a large range in the bottom of the water holding barrel 100. So it is beneficial to promote the dissolution of the detergent, and at the same time to quickly wet the laundry.

In another preferred solution of this embodiment, the water outlet of the water holding barrel is arranged close to the rear of the water holding barrel, and the return port of the water holding barrel is arranged close to the opening of the water holding barrel. Similar to the previous solution, a water flow is formed from the opening of the barrel to the rear of the barrel, and the range of the water flow can cover almost the entire length of the water holding barrel in the axial direction, which can strengthen the flow of water in a wider area and improve the washing effect.

In this embodiment, it is preferable that the filter device 600 is arranged under the water holding barrel 100, so that the entire circulation filter pipeline is located under the water holding barrel 100, and the structure is more compact. The installation space in the washing machine is reduced.

In a further solution of this embodiment, a switching device is provided between the water inlet of the circulation filter pipeline and the filter device 600. The switching device is connected with the drainage pipeline 210 through which water is drained to the outside of the washing machine, and controls one of the filter device 600 and the water inlet of the drainage pipeline 210 to connect with the water inlet of the circulation filter pipeline, that is, the water outlet 102 of the water holding barrel is communicated.

Specifically, a circulation pump 400 is provided between the switching device and the water inlet of the circulation filter pipeline. The switching device is a switching valve assembly 271, including:
a water inlet, communicated with the water outlet of the circulation pump 400;
a first water outlet, communicated with the filter device 600;
a second water outlet, communicated with the water inlet of the drainage pipeline 210; and
a switching mechanism, controlling one of the first water outlet and the second water outlet to be communicated with the water inlet.

In detail, the water outlet 102 of the water holding barrel is connected with the drainage pipe 260 of the water holding barrel. The water outlet of the drainage pipe 260 of the water holding barrel is connected with the water inlet of the circulation pump 400. The water outlet of the circulation pump 400 is connected with the water inlet of the switching valve assembly 271 through the circulation pipeline 220. The filter device 600 is provided with a water inlet 6101, the water inlet 6101 is connected with the first water outlet of the switching valve assembly 271, and the second water outlet of the switching valve assembly 271 is directly connected with the water inlet of the drainage pipeline 210.

The filter device 600 also has a filtered water outlet 6102 for draining out the filtered water. The filtered water outlet 6102 is communicated with the return port 101 of the water holding barrel through the return water pipeline 230, and the filtered water is delivered back to the water holding barrel 100.

In the above solution, the switching device is provided in the washing machine to control the flow direction of water from the water outlet 102 of the water holding barrel, so as to control the flow direction of the water flowing out of the water holding barrel 100. When the switching device makes the water outlet 102 of the water holding barrel be communicated with the water inlet 6101 of the filter device 600, the water in the water holding barrel 100 can flow into the filter device 600. When the switching device makes the water outlet 102 of the water holding barrel be communicated with the drainage pipeline 210, the water in the water holding barrel 100 is directly drained out of the washing machine through the drainage pipeline 210. Through the above setting method, there is no need to respectively set up the drainage waterway and the circulation waterway completely independent on each other in the washing machine, but the drainage waterway and circulation waterway can share part of the pipelines. So the pipeline distribution in the washing machine is simplified, and the installation space is saved.

In this embodiment, the switching valve assembly 271 is used as the switching device for controlling the direction of the water flow, which has a simple structure, low production cost, and is easy to be installed. The circulation pump 400 is provided between the water outlet 102 of the water holding barrel and the switching valve assembly 271 for pumping out the water in the water holding barrel 100. Since the circulation pump 400 is arranged on the common pipeline for guiding water to the filtering device 600 and draining water out. One circulation pump 400 is arranged in the washing machine to realize the two purposes of guiding water to the filtering device 600 and draining water out, thereby reducing the number of water pumps, and reducing the production cost.

In this embodiment, as shown in Figure 18, after the circulation pump 400 is turned on, the switching device is controlled to communicate the water inlet 6101 of the water holding barrel 100 with the filter device 600, and the water in the water holding barrel 100 can be circularly delivered into the filter device 600 through the circulation filter pipeline.

Specifically, after the circulation pump 400 is turned on, the switching mechanism in the switching valve assembly 271 is controlled to communicate the water inlet with the first water outlet. The water in the water holding barrel 100 flows out from the water outlet 102 of the water holding barrel, passes through the drainage pipe 260 of the water holding barrel, the circulation pump 400 and the circulation pipeline 220 to enter into the filter device 600. After the filtration is completed, the filtered water is delivered back to the water holding barrel 100 from the return port 101 of the water holding barrel through the return water pipeline 230.

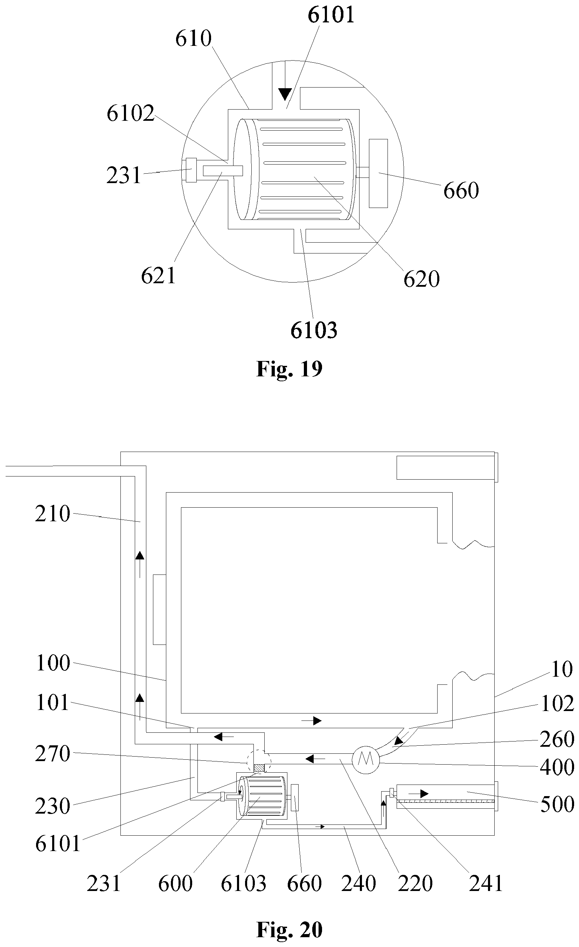

As shown in Figure 20, after the circulation pump 400 is turned on, the switching device is controlled to communicate the water holding barrel 100 with the water inlet of the drainage pipeline 210, so that the water in the water barrel 100 can be delivered into the drainage pipeline 210 to be drained out of the washing machine.

Specifically, after the circulation pump 400 is turned on, the switching mechanism in the switching valve assembly 271 is controlled to communicate the water inlet with the second water outlet. The water in the water holding barrel 100 flows out from the water outlet 102 of the water holding barrel, and passes through the drainage pipe 260 of the water holding barrel, the circulation pump 400 and the circulation pipeline 220 to enter into the drainage pipeline 210, and then is drained out of the washing machine through the drainage pipeline 210.

In this embodiment, both ends of the circulation filter pipeline are connected with the water holding barrel 100 in the washing machine, and the filter device 600 is provided in the circulation filter pipeline. During the washing and rinsing process of the washing machine, the water in the water holding barrel 100 is driven to flow along the circulation filter pipeline, and is continuously filtered through the filter device 600. The impurities carried in the water, such as lint, are collected in the filter device 600, so the lint content in the water in the water holding barrel 100 is reduced, and the washing effect is improved.

Both ends of the circulation filter pipeline are connected with the wall of the water holding barrel 100 in the bottom area. The distance between the water outlet 102 of water holding barrel and the return port 101 of the water holding barrel, which are connected with the circulation filter pipeline, is set to the maximum as far as possible, so that the water in the water holding barrel 100 flows from the return port 101 of the water holding barrel to the water outlet 102 of water holding barrel, and the flow range is large. It is beneficial to promoting to fully and uniformly dissolve the detergent, and quickly wet the laundry, thereby the laundry effect is better.

The washing machine is provided with the switching device, such as a switching valve assembly 271. The direction of water flow from the water outlet of the water barrel 100 can be changed by the switching valve assembly 271. There is no need to set up two independent waterways, which simplifies the distribution of the waterways in the washing machine. One circulation pump 400 can realize the two purposes of guiding water to the filter device 600 and draining water out. So the number of water pumps is reduced, and installation space and production costs are saved.

### Embodiment 14

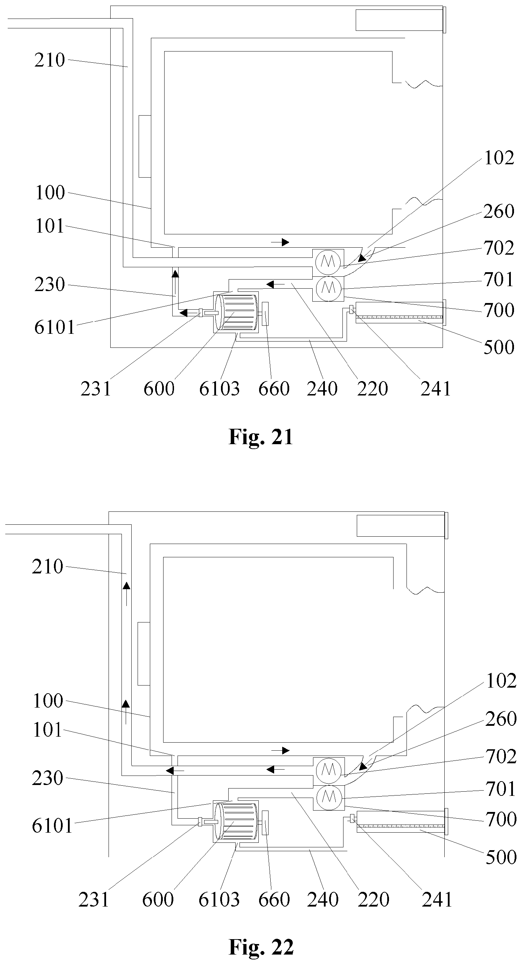

As shown in Figure 17, Figure 21 and Figure 22, the difference between this embodiment and Embodiment 13 is that: the switching device is a circulation drainage pump 700, including:
a pump assembly 710, provided with a pump inlet 723 being communicated with the water inlet of the circulation filter pipeline, that is, the water outlet 102 of the water holding barrel, a circulation water port 721 being communicated with the water inlet 6101 of the filter device, and a drain port 722 being communicated with the water inlet of the drainage pipeline 210;
a circulation motor 701, installed on the pump assembly 710 at a position corresponding to the circulation water port 721 to control to open and close the circulation water port 721; and
a drain motor 702, installed on the pump assembly 710 at a position corresponding to the drain port 722 to control to open and close the drain port 722.

In the above solution, the integrated circulation drainage pump 700 is used as the switching device. When the circulation motor 701 is turned on, the water in the water holding barrel 100 can be pumped into the pump assembly 710 through the pump inlet 723, and pumped out from the circulation water port 721, and then delivered to the filter device 600. When the drainage motor 702 is turned on, water pumped into the pump assembly 710 is pumped out from the drain port 722, delivered into the drainage pipeline 210, and then drained out of the washing machine. Through the above method, the number of water pumps in the washing machine is reduced, thereby saving installation space and reducing installation difficulty. By controlling the power on and off of the circulation motor 701 and the drainage motor 702, the flow direction of the water is controlled, and the logic is simple and easy to realize.

Specifically, the water outlet 102 of the water holding barrel is connected with the drainage pipe 260 of the water holding barrel. The water outlet of the drainage pipe 260 of the water holding barrel is connected with the pump inlet 723. The circulation water port 721 is connected with the water inlet 6101 of the filter device 600 through the circulation pipeline 220, and the drain port 722 is connected with the water inlet of the drainage pipeline 210.

As shown in Figure 17, in this embodiment, the pump assembly 710 of the circulation drainage pump 700 specifically includes:
a pump body 713, being a hollow columnar structure with a certain length, of which one end is closed, and the side wall close to the other end is provided with the pump inlet 723;
a circulation motor installation part 711, arranged on the side wall close to the closed end of the pump body 713, and having a circulation motor installation port communicated with the inside of the pump body 713, wherein, the direction of the circulation motor installation port is perpendicular to the length direction of the pump body 713, and the circulation water port 721 is arranged on the side wall of the circulation motor installation part 711; and
a drainage motor installation part 712, arranged on the end of the pump body 713 where the pump inlet 723 is located, and having a drainage motor installation port communicated with the inside of the pump body 713, wherein the direction of the drainage motor installation port is parallel with the length direction of the pump body 713, the drain port 722 is provided on the side wall of the drain motor installation part 712.

Preferably, the directions of the pump inlet 723 and the circulation water port 721 are parallel to each other, and the direction of the drain port 722 is perpendicular to the direction of the pump inlet 723.

In detail, the output end of the circulation motor 701 is arranged in the circulation motor installation part 711, and is connected with the circulation pump wheel. The circulation water port 721 is located on the outer periphery of the circulation pump wheel. The circulation motor 701 is turned on to drive the circulation pump wheel to rotate, and water entering in the pump body 713 is pumped out through the circulation water port 721.

Similarly, the output end of the drainage motor 702 is disposed in the drainage motor installation part 712 and connected to the drainage pump wheel, and the drain port 722 is located on the outer periphery of the drainage pump wheel. The drainage motor 702 is turned on to drive the drainage pump wheel to rotate, and water entering in the pump body 713 is pumped out through the drain port 722.

In this embodiment, on circulation drainage pump 700 with an integrated structure is installed in the washing machine. By respectively controlling the opening and closing of the circulation motor 701 and the drainage motor 702, the circulation drainage pump 700 can be controlled to deliver water in different directions, and then water in the washing machine can be controlled to flow to the filter device 600 or drain outward. By reducing the number of water pumps, the installation space in the washing machine is saved, and the production cost is reduced, and the control logic of the washing machine is simple and easy to implement.

### Embodiment 15

The difference between this embodiment and Embodiment 14 is that: the switching device includes:
a circulation pump, having a circulation pump housing respectively connected with the filter device and the water inlet of the circulation filter pipeline, and a circulation motor for controlling the filter device to be connected with or disconnected from the water inlet of the circulation filter pipeline; and
a drainage pump, having a drainage pump housing respectively connected with the water inlet of the circulation filter pipeline and the water inlet of the drainage pipeline, and a drainage motor for controlling the water inlet of the circulation filter pipeline to be connected or disconnected from the water inlet of the drainage pipeline.

This embodiment is similar to Embodiment 14, and two driving motors, this is, a circulation motor and a drainage motor, are also provided. By controlling the power on and off of the above two driving motors, the direction communicated with the water outlet of the water holding barrel can be controlled, thereby controlling flow direction of water from the water outlet of the water holding barrel.

In Embodiment 14, both the circulation motor and the drainage motor are installed on the pump body as an integral structure to form an integrated circulation drainage pump. The difference from Embodiment 14 is that: in this embodiment, the circulation motor and the drainage motor are respectively installed in the circulation pump housing and the drainage pump housing arranged separately from each other. Thereby the circulation pump and the drainage pump are respectively connected with the water holding barrel.

When the circulation motor is turned on, the water in the water holding barrel is pumped into the circulation pump housing, and then delivered to the water inlet of the filter device. When the drainage motor is turned on, the water in the water holding barrel is pumped into the drainage pump housing, and then delivered to the drainage pipeline and drained out of the washing machine along the drainage pipeline.

In this embodiment, the switching device is composed of the circulation water pump and the drainage pump which are split. By controlling the power on and off of the circulation motor and the drainage motor, the flow direction of the water from the water holding barrel is switched, which has the same effect as the Embodiment 14.

### Embodiment 16

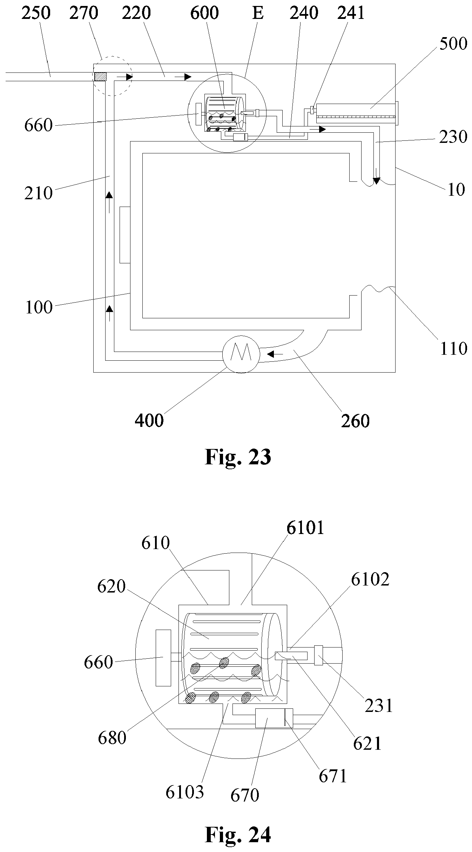

As shown in Figure 23 and Figure 24, the difference between this embodiment and Embodiment 2 is that: cleaning particles 680 are arranged in the filter chamber 610 of the filter device 600, and are used to clean the inner wall of the filter chamber 610 and the outer wall of the filtering mechanism 620. The filter device 600 also includes an intercepting mechanism 670. The intercepting mechanism is arranged outside the filter chamber 610 and communicated with the sewage outlet 6103, for intercepting the cleaning particles 680 drained from the sewage outlet 6103.

During the filtering process, the cleaning particles 680 are between the wall of the filter chamber 610 and the filter mechanism 620. The inner wall of the filter chamber 610 and the outer wall of the filter mechanism 620 are constantly rubbed with the flowing water, so that the attached filtered impurities fall off, and are prevented from depositing on the filter mechanism. The filter mechanism 620 is prevented from being covered by filtered impurities to affect the filter efficiency. On the other hand, it is avoided that the attached impurities after the filtration are thicker and firmly attached to the inner wall of the filter chamber 610 or the outer wall of the filter mechanism 620. Therefore, the filtered impurities are easily to remove when the filter device 600 is cleaned later.

When the filter device 600 needs to be cleaned, the drive mechanism 660 drives the filter mechanism 620 to rotate to stir the water in the filter chamber 610. The filtered impurities on the outer wall of the filter mechanism 620 are stripped off from the outer wall of the filter mechanism 620 under the action of centrifugal force and turbulent water flow, and mixed into the water in the filter chamber 610, and then drained out of the filter chamber 610 through the sewage outlet 6103. In this way, the filter device 600 is automatically cleaned without manual operation by the user, and it is convenient to use.

In the above process, the cleaning particles 680 move in the filter chamber 610 along the turbulent water flow, and rub against the inner wall of the filter chamber 610 and the outer wall of the filter mechanism 620. Thereby the efficiency of stripping off the filtered impurities is improved, and the self-cleaning effect of the filter device 600 is better. When the filtered impurities are drained out, the cleaning particles 680 are drained out of the filter chamber 610 together with the water flow. When passing through the intercepting mechanism 670 arranged downstream of the sewage outlet 6103, the filtered impurities and water flow are discharged through the intercepting mechanism 670, while the cleaning particles 680 are intercepted and collected. In this way, when water is fed into the filter chamber 610 for filtering next time, the cleaning particles 680 can return to the filter chamber 610 to be reused.

In this embodiment, the cleaning particles 680 include, but are not limited to, spherical, ellipsoidal, elliptical cylindrical shapes, and the like. The surface of the cleaning particles 680 may be a smooth surface or a non-smooth surface. The cleaning particles 680 with a non-smooth surface are preferred, which can increase the friction between the cleaning particles and the inner wall of the filter chamber 610 and the outer wall of the filter mechanism 620. The effect of peeling off impurities is better.

The material of the cleaning particles 680 is preferably wear-resistant elastic material, so as to prevent the cleaning particles 680 from being easily worn during use. The resilience of the cleaning particles 680 is preferably 0%-50%. The cleaning particles are made of elastic materials, which are more likely to deform when being stressed, so as to prevent the filter mechanism 620 from being stuck with the cleaning particles 680 during rotation, and preventing the filter device 600 from being damaged.

More preferably, the cleaning particles 680 are made of wear-resistant elastic materials with antibacterial active. For example, antibacterial components such as copper ions or silver ions are added therein. The cleaning particles can also have a certain bactericidal effect on the filtered water during the filtration process.

In a further solution of this embodiment, the intercepting mechanism 670 includes a particle collection chamber. The particle collection chamber has an inlet port being communicated with the sewage outlet 6103, and an outlet port through which sewage carrying filtered impurities is drained out. A blocking member 671 is provided in the particle collection chamber for blocking cleaning particles 680 from being discharged from the outlet port.

Further, the blocking member 671 is a baffle. The distance between the baffle and the inner wall of the particle collection chamber is D, the width of the cleaning particles 680 is d, and D<d.

In the above solution, for spherical cleaning particles 680, the width d is the diameter of the cleaning particles 680. For other shapes of cleaning particles 680, the cleaning particles 680 have different sizes in different directions, so the smallest size among the different sizes is same as the width d, to ensure that the cleaning particles 680 cannot pass through the gap between the baffle and the particle collection chamber in any direction. The cleaning particles 680 are effectively intercepted by the interception mechanism 670.

In a preferred solution of this embodiment, the baffle is arranged perpendicular to the flow direction of the water flow in the particle collection chamber. The cleaning particles 680 move along the water flow, so the moving direction the cleaning particles is basically consistent with the direction of the water flow. The baffle plate is perpendicular to the moving direction of the cleaning particles 680, which can better intercept the cleaning particles. If the baffle is inclined at a certain angle, the cleaning particles 680 with elasticity may be deformed in the gaps located at the lower end of the baffle. So it is possibility to pass through the gaps, resulting in loss of the cleaning particles 680.

Further, both the diameter of the sewage outlet 6103 and the diameter of the inlet port of the particle collection chamber are greater than the width d of the cleaning particles 680. The sewage outlet 6103 is communicated with the inlet port of the particle collection chamber through a pipeline, and the diameter of the pipeline is also greater than the width d of the cleaning particles 680. This ensures that the cleaning particles 680 can smoothly enter the particle collection chamber, and prevents the cleaning particles 680 from being blocked between the sewage outlet 6103 and the particle collection chamber.

In this embodiment, the intercepting mechanism 670 is lower than the sewage outlet 6103 of the filter device 600. The density of the cleaning particles 680 is lower than that of water. When performing the next filtration, the water entering the filter chamber 610 through the water inlet 6101 fills the intercepting mechanism 670 and the pipeline between the intercepting mechanism and the sewage outlet 6103. So the cleaning particles 680 can float in the water, and leave the intercepting mechanism 670, and then delivered back to the filter chamber 610 through the sewage outlet 6103.

In the above solution, the cleaning particles 680 intercepted by the intercepting mechanism 670 can automatically return to the filter chamber 610 during the next filtration of water flow, so as to clean the filtered impurities inside the filter chamber 610 during the filtration process and after the filtration is completed. The cleaning particles 680 can be reused without user operation, and it is more convenient to use.

In the preferred solution of this embodiment, the density of the cleaning particles 680 is in a range of 0.3 to 0.9 times as the density of water, preferably in a range of 0.4 to 0.6 times, so that the cleaning particles 680 can quickly float back to the water surface from the bottom of the water. Thereby the cleaning particles 680 can be quickly delivered to the filter chamber 610 from the intercepting mechanism 670.

Further, the water inlet 6101 on the filter chamber 610 is arranged at the top, and the sewage outlet 6103 is arranged at the bottom. The filtered impurities are sunk under the action of gravity, and the filtered impurities is more easily drained from the sewage outlet 6103 arranged at the bottom of the filter chamber 610. So the filtered impurities are adequately removed.

The diameter of the water inlet 6101 is smaller than the width d of the cleaning particles 680, and the cleaning particles 680 cannot pass through the water inlet 6101. In this way, the cleaning particles 680 are limited to move between the filter chamber 610 and the intercepting mechanism 670. When the filter chamber 610 is filled with water, the cleaning particles 680 can be prevented from moving to the outside of the filter chamber 610 through the water inlet 6101 when floating up under the action of buoyancy.

In the washing machine of this embodiment, the first chamber of the recovery device 500 is communicated with the outlet port of the intercepting mechanism 670 through the sewage pipeline 240. When the sewage carrying the filtered impurities is drained out of the filter device, the cleaning particles 680 are discharged from the sewage outlet 6103 together with the sewage. When passing through the intercepting mechanism 670, the cleaning particles 680 are intercepted by the baffle 671 and collected in the particle collection chamber. The sewage can pass through the intercepting mechanism 670 and then enter the recovery device 500 through the sewage pipeline 240.

The above description is only a preferred embodiment of the present invention, and does not limit the present invention in any form. Although the present invention has been disclosed as above with preferred embodiments, it is not intended to limit the present invention. Anyone familiar with the technology of this patent Without departing from the scope of the technical solution of the present invention, personnel can use the technical content of the above prompts to make some changes or modify them into equivalent embodiments with equivalent changes. In essence, any simple modifications, equivalent changes and modifications made to the above embodiments still fall within the scope of the solutions of the present invention.

## Claims

1. A filter device, comprising:
a filter chamber having a water inlet and a filtered water outlet, and a sealing support part formed by the outer circumference of the filtered water outlet being extended toward the outside the filter chamber;
a filter mechanism, being rotatably arranged in the filter chamber, wherein an end of the filter mechanism is a water outlet joint inserted in the sealing support part, and the water outlet joint is rotatably and hermetically connected with the sealing support part;
a first bearing, being sleeved on the water outlet joint; and
a first sealing member, being disposed on the side of the first bearing facing the inside of the filter chamber, for sealing the gap between the water outlet joint and the sealing support part.

2. The filter device according to claim 1, wherein, the first sealing member is sleeved on the water outlet joint, the inner wall of the first sealing member is in sealing connection with the outer wall of the water outlet j oint, and the outer wall of the first sealing member is rotatable and hermetically connected with the sealing support part.

3. The filter device according to claim 2, comprising a second sealing member, wherein,
the second sealing member is arranged on the side of the first bearing opposite to the interior of the filter chamber, for covering the gap between the water outlet joint and the sealing support part;
preferably, the second sealing member is sleeved on the water outlet joint, the inner wall of the second sealing member is in sealing connection with the outer wall of the water outlet joint, and the outer wall of the second sealing member is rotatable and hermetically with the inner wall of the sealing support part.

4. The filter device according to claim 3, wherein,
the inner wall of the sealing support part has a stepped structure, annular structures are sequentially formed from the end of the sealing support part to the outside of the filter chamber, and
the inner diameters of the annular structures are gradually decreased from a first limiting surface, a second limiting surface and a third limiting surface,
the surface of the first sealing member facing the outside of the filter chamber abuts against the first limiting surface, the surface of the first bearing facing outside the filtering chamber abuts against the second limiting surface, and the surface of the second sealing member facing the outside of the filter chamber abuts against the third limiting surface;
preferably, the outer diameter of the end of the water outlet joint near the outside of the filter chamber is smaller than the outer diameter of the other end, annular structures are formed on the outer wall of the water outlet j oint, and a fourth limiting surface of the water outlet joint is perpendicular to the axis of the water outlet j oint, and a surface of the first bearing facing the inside of the filter chamber abuts against the fourth limiting surface.

5. The filter device according to any one of claims 1 to 4, wherein,
the end of the sealing support part away from the filter chamber is connected to a filter chamber flange, the middle of the filter chamber flange has a through-opening for being communicated with the water outlet joint, and the outer periphery of the through-opening is extended toward a direction away from the sealing support portion to form a connection portion;
preferably, the surface of the filter chamber flange facing the side of the sealing support part has an insertion part, and the insertion part is inserted into an opening at an end of the sealing support part.

6. The filter device according to any one of claims 1 to 5, wherein,
another end of the filter mechanism has a rotation support part extending toward the outside of the filter chamber along the rotation axis, and the filter chamber is provided with an installation port for allowing the rotation support part to pass through, and the rotation support part is rotatably and hermetically connected with the installation port;
preferably, a peripheral of the installation port is extended outward from the filter chamber along the axis of the rotation support part to form a sleeve part, a third sealing member is sleeved on the rotation support part, an inner wall of the third sealing member is hermetically connected with the outer wall of the rotation support part, and an outer wall of the third sealing member is rotatably and hermetically connected with the inner wall of the sleeve part;
more preferably, an inner diameter of an end of the sleeve part away from the filter chamber is smaller than an inner diameter of the other end, the annular structure is formed on the inner wall of the sleeve part, a fifth limiting surface of the sleeve part is perpendicular to the axis of the rotating support part, and a surface of the third sealing member facing the outside of the filter chamber abuts against the fifth limiting surface.

7. The filter device according to claim 6, wherein,
a second bearing is provided between the sleeve part and the rotation support part, and the second bearing is sleeved on the rotation support part, and is located on the side of the third sealing member facing the outside of the filter chamber;
preferably, an outer diameter of one end of the rotation support part close to the filter chamber is larger than an outer diameter of the other end, the annular structure is formed on the outer wall of the rotation support part, a sixth limiting surface of the rotation support part is perpendicular to the axis of the rotation support part, and the surface of the second bearing facing the inside of the filter chamber abuts against the sixth limiting surface.

8. The filter device according to any one of claims 1 to 7, wherein,
the filter chamber has a sewage outlet, and an orientation of the water inlet and the sewage outlet is perpendicular to an axial direction of the filter mechanism;
preferably, the filter chamber has a cylindrical structure, the water inlet is arranged near a first end of the filter chamber, the sewage outlet is arranged near a second end of the filter chamber, and the water inlet and the sewage outlet are symmetrically located around the peripheral direction of filter chamber.

9. The filter device according to any one of claims 1 to 8, wherein,
the outer wall of the sealing support part is provided with a reinforcing rib extending in radial direction of the sealing support part, and the reinforcing rib is connected with the surface of the filter chamber where the filtered water outlet is located.

10. A filter device, comprising:
a filter chamber, having a water inlet, a filtered water outlet and a sewage outlet for discharging filtered impurities;
a filter mechanism, rotatably arranged in the filter chamber to filter water entering the filter chamber; wherein,
the filter device further comprises,
cleaning particles, being capable of being in the filter chamber, and used for cleaning an inner wall of the filter chamber and an outer wall of the filter mechanism with the friction and collision of the water flow; and
an intercepting mechanism, arranged outside the filter chamber, and communicated with the sewage outlet, and used for intercepting the cleaning particles drained out from the sewage outlet.

11. The filter device according to claim 10, wherein,
the intercepting mechanism includes a particle collection chamber, the particle collection chamber has an inlet port communicated with the sewage outlet, and an outlet port for discharging sewage carrying filtered impurities; and
a blocking member is provided in the particle collection chamber for blocking cleaning particles from being discharged from the outlet port.

12. The filter device according to claim 10, wherein,
the blocking member is a baffle, a distance between the baffle and the inner wall of the particle collection chamber is D, a width of the cleaning particles is d, and D<d;
preferably, the baffle is arranged perpendicular to the direction of the water flow in the particle collection chamber.

13. The filter device according to claim 12, wherein, both a diameter of the sewage outlet and a diameter of the inlet port of the particle collection chamber are greater than the width d of the cleaning particles.

14. The filter device according to any one of claims 10 to 13, wherein, the intercepting mechanism is arranged lower than the sewage outlet of the filter device, and a density of the cleaning particles is lower than that of water;
preferably, the density of the cleaning particles is in a range of 0.3 to 0.9 times as the density of water, preferably in a range of 0.4 to 0.6 times.

15. The filter device according to any one of claims 10 to 14, wherein, a sealing support part is formed by extending a periphery of the filtered water outlet toward the outside of the filter chamber;
the filter mechanism has a water outlet joint rotatably inserted in the sealing support part, and a bearing is sleeved on the water outlet joint, a sealing member is provided on the side of the bearing facing the inside of the filter chamber, and the gap between the water outlet joint and the sealing support part is sealed by the sealing member.

16. The filter device according to any one of claims 10 to 14, wherein, both the direction of the water inlet and the direction of the sewage outlet are perpendicular to the axial direction of the filter mechanism;
preferably, the filter chamber has a cylindrical structure, the water inlet is arranged near a first end of the filter chamber, and the sewage outlet is arranged near a second end of the filter chamber.

17. A washing machine, comprising:
a water holding barrel,
a filter device, communicated with the water holding barrel and being for filtering water from the water holding barrel, and having a sewage outlet for draining out the filtered impurities; and
a recovery device, communicated with the sewage outlet of the filter device to collect the filtered impurities discharged from the filter device.

18. The washing machine according to claim 17, wherein, the filter device is the filter device according to any one of claims 1 to 16.

19. The washing machine according to claim 17 or 18, wherein, the recovery device includes:
a housing, having a recovery chamber inside;
a filter assembly, arranged in the recovery chamber and dividing the recovery chamber into a first chamber and a second chamber; wherein,
the sewage outlet of the filter device is communicated with the first chamber, the sewage carrying the filtered impurities is delivered to the first chamber, and to the second chamber after being filtered by the filter assembly, and the filtered impurities are collected in the first chamber;
preferably, a water outlet is provided on the second chamber for discharging the clean water.

20. The washing machine according to claim 19, including a detergent box, wherein,
the detergent box is communicated with the water holding barrel through a pipeline,
the second chamber is communicated with the detergent box, and the clean water being filtered flows into the detergent box from the second chamber , and then enters the water holding barrel.

21. The washing machine according to claim 20, wherein, the recovery device and the detergent box are arranged up and down, and a pathway for allowing the clean water filtered to pass through is arranged between them;
preferably, the pathway through which the clean water filtered passes is extended vertically.

22. The washing machine according to claim 20, wherein, the recovery device is arranged on one side of the detergent box in the horizontal direction, and the pathway through which the clean water filtered passes is arranged between them;
preferably, the pathway through which the clean water filtered passes is extended horizontally;
preferably, the housing of the recycling device and the detergent box are integrally arranged.

23. The washing machine according to claim 19, wherein, the second chamber is communicated with the water holding barrel through a pipeline, and the clean water filtered is delivered into the water holding barrel;
preferably, the washing machine further includes a detergent box, the recovery device and the detergent box are both arranged on a top area of the washing machine, The recovery device is arranged on one side close to the top area, and the detergent box is arranged on the other side near the top area.

24. The washing machine according to claim 23, wherein, a first water return hole is provided on the water holding barrel, and the second chamber is communicated with the first water return hole through a pipeline;
or, a window pad provided on an opening of the water holding barrel, a second water return hole is provided on the window pad, and the second chamber is communicated with the second water return hole through a pipeline.

25. The washing machine according to claim 19, wherein, the washing machine further includes a main drainage pipeline through which water is drained to the outside, and the second chamber is communicated with the main drainage pipeline through a pipeline.

26. The washing machine according to any one of claims 17 to 25, wherein, the washing machine further includes a shell, and the water holding barrel and the filter device are arranged in the shell; the recovery device is capable of being inserted in and extracted out of the shell.

27. The washing machine according to claim 17 or 18, wherein, the washing machine also includes a detergent box, and the detergent box is communicated with the water barrel through a pipeline,
the recovery device is arranged in the detergent box, and includes a filter assembly for filtering sewage carrying filtered impurities;
the sewage in the recovery device is filtered through the filter assembly, and the clean water filtered enters the water holding barrel through the detergent box.

28. The washing machine according to any one of claims 17 to 27, comprising a return water pipeline, wherein,
a water inlet of the return water pipeline is communicated with the filter device, a water outlet of the return water pipeline is communicated with the water holding barrel, and the filtered water in the filter device is delivered into the water holding barrel;
preferably, a return water control valve is provided in the return water pipeline for controlling to cut on or off the return water pipeline.

29. The washing machine according to claim 28, wherein, a window pad is provided at the opening of the water holding barrel, so that the filtered water delivered in the return water pipeline enters the water holding barrel through the window pad.

30. The washing machine according to claim 29, wherein, the window pad is provided with a window pad return port being communicated with the water holding barrel, and the water outlet of the return water pipeline is connected with the window pad return port;
preferably, the window pad return port is disposed on the top area of the window pad.

31. The washing machine according to claim 29, wherein, a spray head assembly is provided on the window pad,
the water outlet of the return water pipeline is connected to the spray head assembly, or, the water outlet of the return water pipeline is connected with a spray pipeline through which water is supplied to the spray head assembly.

32. The washing machine according to claim 28, wherein, the water holding barrel is provided with a return port of the water holding barrel, and the water outlet of the return water pipeline is connected with the return port of the water holding barrel;
preferably, the return port of the water holding barrel is arranged on a barrel wall of the water holding barrel.

33. The washing machine according to claim 32, wherein, a buffer member is provided at the water outlet of the return water pipeline, and the return water pipeline is connected with the return port of the water holding barrel through the buffer member;
preferably, the buffer member is a bellows with a certain length.

34. The washing machine according to claim 28, wherein, the washing machine further includes a main water inlet pipeline connected with an external water source, and the water outlet of the return water pipeline is connected with the main water inlet pipeline.

35. The washing machine according to claim 34, wherein, a detergent box is provided in the main water inlet pipeline, the water inlet of the detergent box is communicated with the external water source, and the water outlet the detergent box is communicated with the water holding barrel;
the detergent box is provided with a filtered water inlet, and the water outlet of the return water pipeline is connected with the filtered water inlet, and the filtered water delivered in the return water pipeline enters the water holding barrel through the detergent box.

36. The washing machine according to any one of claim 28 to 35, wherein, the sewage outlet of the filtering device is connected with the recovery device through a sewage pipeline, and a sewage control valve for controlling to cut on and cut off the sewage pipeline is arranged on the sewage pipeline;
preferably, when the sewage control valve is opened, the sewage pipeline is unidirectionally communicated from the filter device to the recovery device.

37. The washing machine according to any one of claim 17 to 36, comprising,
an external drainage pipeline , used for draining water to the outside of the washing machine; and
a switching device, controlling one of the filter device and the drainage pipeline to be connected to the water holding barrel.

38. The washing machine according to claim 37, wherein, the switching device is a switching valve assembly, including:
a water inlet, being communicated with the water holding barrel through a pipeline;
a first water outlet, being communicated with the filter device;
a second water outlet, being communicated with the external drainage pipeline; and
a switching mechanism, controlling one of the first water outlet and the second water outlet to be communicated with the water inlet.

39. The washing machine according to claim 38, wherein, a circulation pump is arranged between the water inlet of the switching valve assembly and the water holding barrel;
preferably, the water holding barrel is provided with a drainage pipe of the water holding barrel, and the drainage pipe of the water holding barrel is connected with the water inlet of the circulation pump;
the water outlet of the circulation pump is connected with the drainage pipeline, and the drainage pipeline is connected with the water inlet of the switching valve assembly.

40. The washing machine according to claim 37, wherein, the switching device is a circulation drainage pump, including:
a pump assembly, provided with a pump inlet communicated with the water holding barrel, a circulation water port communicated with the filtering device, and a drain port communicated with the external drainage pipeline;
a circulation motor, installed on the pump assembly at a position corresponding to the circulation water port to control to open and close the circulation water port; and
a drain motor, installed on the pump assembly at a position corresponding to the drain port to control to open and close the drain port.

41. The washing machine according to claim 40, wherein, the water holding barrel is provided with a drainage pipe of the water holding barrel, and the drainage pipe of water holding barrel is connected to the pump inlet,
the circulation water port is communicated with the filter device through the circulation pipeline, and the drain port is communicated with the external drainage pipeline through the drainage pipeline.

42. The washing machine according to claim 40 or 41, wherein, the pump assembly includes:
a pump body, being a hollow columnar structure with a certain length, of which one end is closed, and the side wall close to the other end is provided with the pump inlet;
a circulation motor installation part, arranged on the side wall close to the closed end of the pump body, and having a circulation motor installation port communicated with the inside of the pump body, wherein, the direction of the circulation motor installation port is perpendicular to the length direction of the pump body, and the circulation water port is arranged on the side wall of the circulation motor installation part; and
a drainage motor installation part, arranged on the end of the pump body where the pump inlet is located, and having a drainage motor installation port communicated with the inside of the pump body, wherein the direction of the drainage motor installation port is parallel with the length direction of the pump body, and the drain port is provided on the side wall of the drain motor installation part;
preferably, the directions of the pump inlet and the circulation water port are parallel to each other, and the direction of the drain port is perpendicular to the direction of the pump inlet.

43. The washing machine according to any one of claims 17 to 19, comprising, a circulation filter pipeline, wherein,
the water inlet and the water outlet of the circulation filter pipeline are respectively connected with the bottom area of the water holding barrel, and the filter device is arranged on the circulation filter pipeline.

44. The washing machine according to claim 43, wherein,
a water outlet of the water holding barrel is provided at the bottom area of the wall of the water holding barrel, and is connected with the water inlet of the circulation filter pipeline;
the bottom area of the wall of the water holding barrel is also provided with a return port of the water holding barrel, and the return port is connected with the water outlet of the circulation filter pipeline;
preferably, the water outlet of the water holding barrel is arranged close to the opening of the water holding barrel, and the return port of the water holding barrel is arranged close to the rear of the water holding barrel;
or, the water outlet of the water holding barrel is arranged close to the rear of the water holding barrel, and the return port of the water holding barrel is arranged close to the opening of the water holding barrel.

45. The washing machine according to claim 43 or 44, wherein, a switching device is provided between the water inlet of the circulation filter pipeline and the filter device,
the switching device is connected with the drainage pipeline through which water is drained to the outside of the washing machine, and controls one of the filter device and the water inlet of the drainage pipeline to be connected with the water inlet of the circulation filter pipeline.

46. The washing machine according to claim 45, wherein, a circulation pump is provided between the switching device and the water inlet of the circulation filter pipeline,
a switching device includes:
a water inlet, communicated with the water outlet of the circulation pump;
a first water outlet, communicated with the filter device;
a second water outlet, communicated with the water inlet of the drainage pipeline; and
a switching mechanism, controlling one of the first water outlet and the second water outlet to be communicated with the water inlet.

47. The washing machine according to claim 45, wherein, the switching device is a circulation drainage pump, including:
a pump assembly, comprising a pump inlet being communicated with the water inlet of the circulation filter pipeline, a circulation water port being communicated with the filter device, and a drain port being communicated with the water inlet of the drainage pipeline;
a circulation motor, installed on the pump assembly at a position corresponding to the circulation water port to control to open and close the circulation water port; and
a drain motor, installed on the pump assembly at a position corresponding to the drain port to control to open and close the drain port.

48. The washing machine according to claim 45, wherein, the switching device includes:
a circulation pump, having a circulation pump housing respectively connected with the filter device and the water inlet of the circulation filter pipeline, and a circulation motor for controlling the filter device to be connected with or disconnected from the water inlet of the circulation filter pipeline; and
a drainage pump, having a drainage pump housing respectively connected with the water inlet of the circulation filter pipeline and the water inlet of the drainage pipeline, and a drainage motor for controlling the water inlet of the circulation filter pipeline to be connected or disconnected from the water inlet of the drainage pipeline.

49. The washing machine according to any one of claims 1 to 48, wherein, the filtering device is arranged under the water holding barrel;
preferably, the recovery device is arranged at the bottom area of the washing machine.

50. A control method for the washing machine according to any one of claims 28 to 36, wherein, the washing machine also includes a circulation pump, and the circulation pump is arranged on the pipeline connecting the water holding barrel with the water inlet of the filter device, or on the return water pipeline, wherein, the control method includes:
turning on the circulation pump,
delivering water in the water holding barrel to the filter device for filtering, and
delivering the filtered water back to the water holding barrel through the return water pipeline.

51. A control method for the washing machine according to any one of claims 37 to 42, wherein, the switching device connects the water holding barrel with the filter device, and the water in the water holding barrel is delivered into the filter device,
the switching device connects the water holding barrel with the discharge pipeline, and the water in the water holding barrel is drained out of the washing machine through the discharge pipeline.

52. The control method for the washing machine according to claim 51, wherein,
the filter device has a filtered water outlet, and the filtered water outlet is communicated with the water holding barrel through the return water pipeline, and a return water control valve is set on the return water pipeline;
the sewage outlet of the filter device is connected with the recovery device through a sewage pipeline, and a sewage control valve is arranged on the sewage pipeline;
the water holding barrel is communicated with the filter device by the switching device,
when the return water pipeline is open by the return water control valve and the sewage control valve is close, the water in the water holding barrel is passed into the filter device for filtration, and the filtered water flows back to the water holding barrel through the return water pipeline;
the water holding barrel is communicated with the filter device by the switching device,
when the return water control valve is closed and the sewage pipe is open by the sewage control valve, the water in the water holding barrel is passed into the filter device for cleaning the filter device, and then passed into the recovery device by the sewage pipeline.

53. A control method for the washing machine according to any one of claims 43 to 49, wherein, The water in the water holding barrel is delivered into the filter device through the circulation filter pipeline, and the water is filtered by the filter device, and then the filtered water is delivered into the water holding barrel along the circulation filter pipeline.

54. The control method for the washing machine according to claim 53, wherein, the switching device is provided between the water inlet of the circulation filter pipeline and the filter device, and the switching device is connected with the drainage pipeline through which water is drained to the outside of the washing machine;
the water holding barrel is communicated with the filter device by the switching device, and water in the water holding barrel is delivered into the filter device through the circulation filter pipeline;
the water holding barrel is communicated with the water inlet of the drainage pipeline by the switching device, and the water in the water holding barrel is delivered into the drainage pipeline and is discharged from the washing machine.
